# EUROPEAN PATENT SPECIFICATION

(11) **EP 2 068 385 B1**
(45) Date of publication and mention of the grant of the patent: **19.06.2013**
(21) Application number: 08721253.6
(22) Date of filing: 04.03.2008
(51) Int. Cl.: H01M 10/052, H01M 4/36, H01M 4/62, H01M 4/04, H01M 4/13

(54) **COMPOSITION FOR BATTERY**
ZUSAMMENSETZUNG FÜR EINE BATTERIE
COMPOSITION POUR BATTERIE

(30) Priority: 05.03.2007 JP 2007054384
(43) Date of publication of application: 10.06.2009
(73) Proprietor: Toyo Ink Mfg. Co., Ltd, Tokyo 104-8377 (JP)
(72) Inventor: HIROTA, Naohisa, Tokyo 104-8377 (JP); ITABASHI, Tadashi, Tokyo 104-8377 (JP); MAKI, Shinichiro, Tokyo 104-8377 (JP); NAKASONE, Daisuke, Tokyo 104-8377 (JP)
(74) Representative: Maiwald, Walter
(86) International application number: PCT/JP2008/053833
(87) International publication number: WO 2008/108360

(56) References cited:
- EP-A1- 1 439 211
- JP-A- 63 236 258
- JP-A- 2000 113 891
- JP-A- 2004 224 948
- JP-A- 2006 516 795
- KR-A- 20040 104 400

## Description

### TECHNICAL FIELD

The present invention relates to a composition used for producing electrodes composing a battery and to a production process of the same. In particular, the composition for a battery of the present invention is preferably used to produce a lithium secondary battery. In addition, the present invention relates to a lithium secondary battery provided with electrodes having superior discharging characteristics and charging characteristics at large currents, superior cycle properties, superior electroconductivity of the electrode composite, and low contact resistance between the current collector and electrode composite.

### BACKGROUND ART

Digital cameras, cell phones and other compact portable electronic devices have come to be widely used in recent years. These electronic devices are continuously required to minimize volume and have light weight, and the batteries installed therein are required to realize small size, light weight and large capacity. In addition, the large secondary batteries for installation in automobiles and the like are also desired to realize large non-aqueous electrolyte secondary batteries in place of conventional lead storage batteries.

In order to respond to these requirements, there has been considerable activity in the development of lithium secondary batteries. The electrodes used by these lithium secondary batteries consist of positive electrodes, in which an electrode composite consisting of a positive electrode active substance containing lithium ions, an electroconductive assistant and an organic binder and the like is adhered to the surface of a metal foil current collector, and negative electrodes, in which an electrode composite consisting of a negative electrode active substance allowing insertion and extraction of lithium ions, an electroconductive assistant and an organic binder and the like is adhered to the surface of a metal foil current collector.

Although lithium-transition metal complex oxides such as lithium cobalt oxide or lithium manganese oxide are typically used as positive electrode active substances, due to their low level of electron conductivity, adequate battery performance is unable to be obtained if used alone. Therefore, attempts have been made to reduce internal resistance of the electrodes by improving electroconductivity by adding a carbon material as an electroconductive assistant such as carbon black (e.g., acetylene black) or graphite.

On the other hand, graphite is normally used for the negative electrode active substance. Although graphite itself has electrical conductivity, charging and discharging characteristics are also known to be improved by adding an electroconductive assistant in the form of a carbon black such as acetylene black together with the graphite. This is thought to probably be due to the fact that, although numerous voids end up forming when graphite particles alone are filled into an electrode layer due to the particle diameter thereof being generally large, when used in combination with an electroconductive assistant in the form of carbon black, the fine carbon black particles fill in the voids between the graphite particles, thereby increasing contact surface area and lowering resistance. However, in this case as well, electroconductive effects diminish if dispersion of the electroconductive assistant is inadequate.

In this manner, reducing internal resistance of the electrodes in particular is an extremely important factor in terms of enabling discharging at large currents and of improving the efficiency of charging and discharging.
However, carbon materials having superior electroconductivity (electroconductive assistants) are difficult to uniformly mix and disperse in slurries for forming electrode composites of lithium secondary batteries due their large structure and specific surface area resulting in strong cohesive force. In the case control of dispersibility and particle size of a carbon material as an electroconductive assistant is inadequate, electrode internal resistance is not decreased due to not forming a uniform electroconductive network. As a result, the problem occurs of not being able to adequate take advantage of the performance of active substances in the form of lithium-transition metal complex oxide or graphite and the like. In addition, if dispersion of an electroconductive assistant in an electrode composite is inadequate, resistance is distributed on the electrode plates attributable to partial cohesion, thereby resulting in problems such as concentration of current during use as a battery resulting in the promotion of partial heating and deterioration.

In addition, in the case of forming an electrode composite layer on an electrode current collector such as metal foil, when charging and discharging are repeated numerous times, adhesion of the interface between the current collector and electrode composite layer and the interface between the active substance and the electroconductive assistant inside the electrode composite become poor, thereby resulting in the problem of a decrease in battery performance. This is thought to be due to exacerbation of interface adhesion caused by the generation of localized shear stress at the interface between the electrode composite layer and current collector and at the interface between the active substance and electroconductive assistant attributable to repeated expansion and contraction of the active substance and electrode composite layer caused by doping and dedoping of lithium ions during charging and discharging. In this case as well, adhesion decreases remarkably if dispersion of the electroconductive assistant is inadequate. This is thought to be due to the presence of coarse aggregated particles making it difficult to alleviate stress.

In addition, as an example of a problem between the electrode current collector and electrode composite, if aluminum is used for the current collector of the positive electrode, for example, an insulating oxide film is formed on the surface thereof, thereby resulting in the problem of increased contact resistance between the electrode current collector and electrode composite.

Several solutions have been proposed for the problems between the electrode current collector and electrode composite as described above. For example, in Patent Document 1 and Patent Document 2, although methods are attempted for forming a coated film, in which is dispersed an electroconductive assistant such as carbon black, on an electrode foundation layer in the form of a collecting electrode, in this case as well, adequate effects are unable to be obtained if dispersion of the electroconductive assistant is poor.

In a lithium secondary battery, dispersion of the electroconductive assistant in the form of carbon black is an important factor. Patent Document 3 and Patent Document 4 describe the use of a surfactant as a dispersant when dispersing carbon black in a solvent. However, since the adsorptive force of the surfactant to the surface of carbon materials is weak, a large amount of surfactant must be added to obtain satisfactory dispersion stability. As a result, the amount of active substance that can be contained decreases and battery capacity ends up decreasing. In addition, if adsorption of surfactant to the carbon material is inadequate, the carbon material ends up aggregating. In addition, dispersion effects of typical surfactants are much lower in organic solvents as compared with dispersion in aqueous solutions.

In addition, Patent Document 5 and Patent Document 6 disclose a method for producing an electrode composite by improving the dispersed state of a carbon slurry by adding a dispersing resin when dispersing carbon black in a solvent, and the mixing that carbon slurry and an active substance. In this method, however, although the dispersibility of the carbon black is improved, since a large amount of dispersing resin is required in the case of dispersing fine carbon black having a large specific surface area, and since the dispersing resin having a large molecular weight ends up covering the surface of the carbon black, the formation of an electroconductive network is inhibited, thereby resulting in an increase in electrode resistance which may offset the effects of improving dispersibility of the carbon black.

Moreover, an example of another important factor for improving charging and discharging efficiency in addition to improving dispersibility of the electrode material is improvement of wettability of an electrode to an electrolyte. Since the electrode reaction occurs at the contact interface between the surface of the electrode material and the electrolyte, it is important that the electrolyte penetrates inside the electrode and adequately wets the electrode material. Although studies have been conducted on methods for promoting the electrode reaction by increasing the surface area of the electrode using a fine active substance or electroconductive assistant, in the case of using a carbon material in particular, wetting by the electrolyte is poor, and since the actual contact surface area does not become large, there is the problem of difficulty in improving battery performance.

An example of a method for improving electrode wettability is disclosed in Patent Document 7 in which fine voids are created between active substance particles by containing carbon fibers having a fiber diameter of 1 to 1000 nm within the electrode. However, since carbon fibers normally become intricately entangled, their uniform dispersion is difficult, thereby preventing the production of a uniform electrode simply by mixing in carbon fibers alone. In addition, although the same publication also describes a method using carbon fibers in which the surface of the carbon fibers has been subjected to oxidation treatment in order to control dispersion, oxidation treatment of the carbon fibers directly results in the problem of decreases in electroconductivity and strength of the carbon fibers. In addition, although Patent Document 8 discloses a method for improving wettability by adsorbing a surfactant in the manner of a higher fatty acid alkaline salt onto a negative electrode material having carbon powder for the main agent thereof, since surfactants frequently have inadequate dispersion performance in non-aqueous systems as previously described, a uniform electrode coated film cannot be obtained. In all of these examples, overall performance, including dispersibility of the electrode material, is inadequate.

In addition, in lithium secondary batteries, in addition to the above-mentioned problems, there are also the problems of deterioration of battery performance caused by reduction and/or precipitation of metal components on the negative electrode as well as problems relating to safety in the form or overheating and ignition caused by the occurrence of a short-circuit. Possible causes of deterioration of battery performance and short-circuiting caused by metal components include (1) contamination by metal impurities such as copper and iron in the production process, (2) elution of metal ions contained in the positive electrode, current collector or battery receptacle and the like into the electrolyte followed by their reduction and/or precipitation on the negative electrode, and (3) elution of metal ions from the positive electrode active substance caused by deterioration of the positive electrode resulting in their reduction and/or precipitation thereof on the negative electrode.

Patent Document 9 attempts to inhibit precipitation of metal ions by introducing cation exchange groups onto the surface of a separator and trapping cations that elute from the positive electrode on the surface of the separator, thereby inhibiting precipitation on the negative electrode. In this case, however, since the separator in which cation exchange groups are introduced onto the surface thereof is obtained by immersing a non-woven fabric serving as the base of the separator in an aqueous solution of acrylic acid (monomer) and a polymerization initiator followed by irradiating with ultraviolet light in a nitrogen atmosphere, the production process becomes complex and is not suitable for large-volume production. In addition, ions that pass through the separator cannot be trapped.

With the foregoing in view, an object of the present invention is to stabilize dispersion in a composition for a battery containing an electroconductive assistant without inhibiting the electroconductivity of the electroconductive assistant, improve wettability of a carbon material in the form of the electroconductive assistant with respect to electrolyte, and impart the electroconductive assistant with a function for trapping metal ions, thereby improving battery performance of a battery produced using this composition.

Patent Document 1: Japanese Patent Application Laid-open No. 2000-123823
Patent Document 2: Japanese Patent Application Laid-open No. 2002-298853
Patent Document 3: Japanese Patent Application Laid-open No. S63-236258
Patent Document 4: Japanese Patent Application Laid-open No. H8-190912
Patent Document 5: Japanese Patent Application Laid-open No. 2003-157846
Patent Document 6: National Publication of Translated Version No. 2006-516795
Patent Document 7: Japanese Patent Application Laid-open No. 2005-063955
Patent Document 8: Japanese Patent Application Laid-open No. H6-60877
Patent Document 9: Japanese Patent Application Laid-open No. 2002-25527

As a result of conducting extensive studies to achieve the above-mentioned object, the inventors of the present invention found that by adding at least one type dispersant in the form of an organic pigment derivative having an acidic functional group or a triazine derivative having an acidic functional group when dispersing a carbon material as an electroconductive assistant in a solvent, not only can a dispersion of carbon material particles be prepared having superior dispersion stability, but wettability of the carbon material particles to a battery electrolyte can be improved. JP2004224948 discloses a method to produce.a carbon black composition comprising dry treatment of carbon black together with an organic colorant derivative or a triazine derivative having acidic or basic functional group. Examples include an organic derivative or a triazine derivative having an acidic functional group such as (-SO₃H), (-COOH), (-SO₃M, -COOM). Moreover, the inventors of the present invention found that a composition containing this dispersion of carbon material particles demonstrates battery performance improving effects thought to be attributable to reduction of electrode resistance and improvement of adhesion between an electrode current collector and electrode composite or between an active substance and an electroconductive assistant, wettability improving effects with respect to the electrolyte, and metal ion precipitation preventing effects, thereby leading to completion of the present invention.
Although the composition for a battery of the present invention can be applied to a lithium secondary battery, nickel-hydrogen secondary battery, nickel-cadmium secondary battery, alkaline manganese battery, lead battery, fuel cell or capacitor and the like, it is preferably used in a lithium secondary battery in particular.

### DISCLOSURE OF THE INVENTION

Namely, the present invention relates to a composition for a battery according to claim 1 comprising at least one type of dispersant selected from an organic pigment derivative having an acidic functional group or a triazine derivative having an acidic functional group, and a carbon material as an electroconductive assistant.
In addition, the present invention relates to the composition for a battery as described above in which the acidic functional group is is a phosphoric acid group (-P(O)(-OH)₂).
In addition, the present invention relates to the composition for a battery as described above in which the acidic functional group is an ammonium sulfonate salt or an ammonium carboxylate salt. In addition, the present invention relates to the composition for a battery as described above in which the acidic functional group is an ammonium phosphate salt.
In addition, the present invention relates to the composition for a battery as described above in which the at least one type of dispersant selected from an organic pigment derivative having an acidic functional group or a triazine derivative having an acidic functional group is non-water-soluble.

In addition, the present invention relates to any composition for a battery as described above that further contains a solvent.
In addition, the present invention relates to any composition for a battery as described above in which the mean dispersed particle diameter (D₅₀) of the carbon material as an electroconductive assistant is 2 µm or less.
In addition, the present invention relates to any composition for a battery as described above further containing a binder component.
In addition, the present invention relates to the composition for a battery as described above in which the binder component is a polymer compound containing a fluorine atom within a molecule thereof.
In addition, the present invention relates to any composition for a battery as described above in which the relative permittivity of the solvent is 15 to 200.
In addition, the present invention relates to any composition for a battery as described above in which the donor number of the solvent is 15 to 60 Kcal/mol.
In addition, the present invention relates to any composition for a battery as described above in which the solvent is aprotic.
In addition, the present invention relates to any composition for a battery as described above further containing a positive electrode active substance or negative electrode active substance.

In addition, the present invention relates to a production process of a composition for a battery comprising dispersing a carbon material as an electroconductive assistant in a solvent in the presence of at least one type of dispersant selected from an organic pigment derivative having an acidic functional group or a triazine derivative having an acidic functional group.
In addition, the present invention relates to a production process of a composition for a battery comprising mixing a positive electrode active substance, a negative electrode active substance or a binder component into a dispersion obtained by dispersing a carbon material as an electroconductive assistant in a solvent in the presence of at least one type of dispersant selected from an organic pigment derivative having an acidic functional group or a triazine derivative having an acidic functional group.

In addition, the present invention relates to a lithium secondary battery provided with a positive electrode having a positive electrode composite layer on a current collector, a negative electrode having a negative electrode composite layer on a current collector and an electrolyte containing lithium, wherein the positive electrode composite layer or the negative electrode composite layer is formed by using any composition for a battery described above containing a positive electrode active substance or negative electrode active substance.
Moreover, the present invention relates to a lithium secondary battery provided with a positive electrode having a positive electrode composite layer on a current collector, a negative electrode having a negative electrode composite layer on a current collector and an electrolyte containing lithium, wherein an electrode foundation layer is formed between the positive electrode composite layer and the current collector or between the negative electrode composite layer and the current collector using any composition for a battery described above.

According to a preferred embodiment of the present invention, since a composition for a battery realizes superior dispersion stability of an electroconductive assistant together with dispersion stability without inhibiting the electroconductive of the electroconductive assistant, improves the wettability of an electrode according to the present composition for a battery with respect to electrolyte, and inhibits precipitation of metal ions, the use of the composition for a battery as claimed in a preferred embodiment of the present invention makes it possible to improve overall battery performance of a lithium secondary battery and the like.

### BEST MODE FOR CARRYOUT OUT THE INVENTION

The composition for a battery of the present invention comprises at least one type of dispersant selected from an organic pigment derivative having an acidic functional group or a triazine derivative having an acidic functional group, and a carbon material as an electroconductive assistant, a detailed explanation of which is provided below.

### <Electroconductive Assistant (Carbon Material)>

A carbon material is the most preferable for the electroconductive assistant of the present invention. Although there are no particular limitations on the carbon material provided it is a carbon material having electroconductivity, examples of carbon material that can be used include graphite, carbon black, carbon nanotubes, carbon nanofibers, carbon fibers and fullerene, either alone or by combining two or more types thereof. The use of carbon black is preferable in terms of electroconductivity, ease of acquisition and cost.

Examples of carbon black that can be used include various types thereof such as furnace black, produced by continuously thermally decomposing a gas or liquid raw material in a reaction furnace, ketjen black using ethylene bottom oil for the raw material in particular, channel black precipitated by burning a raw material gas and rapidly cooling the flame by contacting with the bottom of channel steel, thermal black obtained by periodically repeating combustion and thermal decomposition of a raw material, or acetylene black using acetylene gas for the raw material in particular, used alone or by combining two or more types thereof. In addition, carbon black subjected to ordinary oxidation treatment or hollow carbon and the like can also be used.
Carbon oxidation treatment is typically carried out for improving the dispersibility of carbon, such as by treating carbon at a high temperature in air, secondarily treating with nitric acid, nitrogen dioxide or ozone and the like, or treating by directly introducing (covalently bonding) onto the carbon surface an oxygen-containing polar functional group such as a phenol group, quinone group, carboxyl group or carbonyl group. However, since the electroconductivity of carbon typically decreases the greater the number of functional groups introduced, the use of carbon not subjected to oxidation treatment is preferable.

The larger the value of the specific surface area of the carbon black used the better, and in order to increase contact points between carbon black particles, it is advantageous to lower the internal resistance of the electrodes. More specifically, the specific surface area (BET) of the carbon black used as determined from the amount of adsorbed nitrogen is 20 to 1500 m²/g, preferably 50 to 1500 m²/g and more preferably 100 to 1500 m²/g. If carbon black is used having a specific surface area of less than 20 m²/g, it may be difficult to obtain adequate electroconductivity, and if carbon black is used having a specific surface area in excess of 1500 m²/g, it may be difficult to acquire commercially available materials.

In addition, the particle diameter of the carbon black used in terms of the primary particle diameter thereof is preferably 0.005 to 1 µm, and particularly preferably 0.01 to 0.2 µm. However, the primary particle diameter referred to here is the average of particle diameter as measured with an electron microscope and the like.

Examples of commercially available carbon black include, but are not limited to, Toka Black #4300, #4400, #4500 or #5500 (furnace black, Tokai Carbon), Printex L (furnace black, Degussa), Raven 7000, 5750, 5250, 5000ULTRAIII or 5000ULTRA, Conductex SC ULTRA or Conductex 975 ULTRA (furnace black, Columbian Chemicals), #2350, #2400B, #30050B, #3030B, #3230B, #3350B, #3400B or #5400B (furnace black, Mitsubishi Chemical), Monarch 1400, 1300, 900, Vulcan XC-72R or Black Pearls 2000 (furnace black, Cabot), Ketjen Black EC-300J or EC-600J (Akzo), and Denka Black, Denka Black HS-100 or FX-35 (acetylene black, Denki Kagaku Kogyo).

### <Dispersant>

At least one type of dispersant selected from an organic pigment derivative having an acidic functional group or a triazine derivative having an acidic functional group is used for the dispersant of the present invention. In particular, a triazine derivative represented by the following general formula (1) or an organic pigment derivative represented by the following general formula (4) is used preferably.

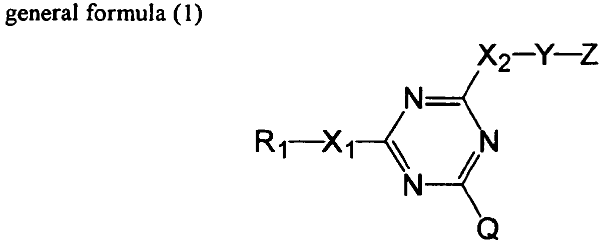

X₁ represents -NH-, -O-, -CONH-, -SO₂NH-, -CH₂NH-, -CH₂NHCOCH₂NH- or -X₃-Y-X₄-, X₂ and X₄ respectively and independently represent -NH- or -O-, and X₃ represents -CONH-, -SO₂NH-, -CH₂NH-, -NHCO- or -NHSO₂-,
Y represents an optionally substituted alkylene group, optionally substituted alkenylene group or optionally substituted arylene group composed of 1 to 20 carbon atoms,
Z represents -SO₃M, -COOM or -P(O)(-OM)₂ and M represents one equivalent of a monovalent to trivalent cation,
R₁ represents an organic pigment residue, optionally substituted heterocyclic group, optionally substituted aromatic ring residue or group represented by the following general formula (2), and
Q represents -O-R₂, -NH-R₂, a halogen group, -X₁-R₁ or -X₂-Y-Z, and R₂ represents a hydrogen atom, optionally substituted alkyl group or optionally substituted alkenyl group.

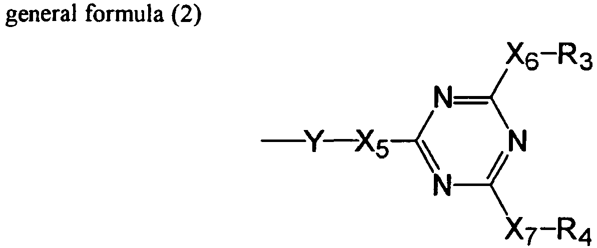

X₅ represents -NH- or -O- and X₆ and X₇ respectively and independently represent -NH-, -O-, -CONH-, -SO₂NH-, -CH₂NH- or -CH₂NHCOCH₂NH-, and
R₃ and R₄ respectively and independently represent an organic pigment residue, optionally substituted heterocyclic residue, optionally substituted aromatic ring residue or -Y-Z, and Y and Z represent the same meanings as in general formula (1).

Examples of organic pigment residues represented by R₁ of general formula (1) and by R₃ and R₄ of general formula (2) include diketopyrrolopyrrole pigments, azo pigments such as azo, disazo or polyazo pigment, phthalocyanine pigments, anthraquinone pigments such as diaminodianthraquinone, anthrapyrimidine, flavanthrone, anthoanthrone, indanthrone, pyranthrone or violanthrone pigment, quinacridone pigments, dioxazine pigments, perynone pigments, perylene pigments, thioindigo pigments, isoindoline pigments, isoindolinone pigments, quinophthalone pigments, threne pigments and metal complex pigments. In particular, the use of an organic pigment residue that is not a metal complex pigment is preferable for enhancing the effect of inhibiting battery short-circuiting caused by metal, and the use of an azo pigment, diketopyrrolopyrrole pigment, inorganic metal phthalocyanine pigment, quinacridone pigment or dioxazine pigment is particularly preferable due to the superior dispersibility thereof.

Examples of heterocyclic residues and aromatic ring residues represented by R₁ in general formula (1) and by R₃ and R₄ in general formula (2) include thiophene, furan, pyridine, pyrazole, pyrrole, imidazole, isoindoline, isoindolinone, benzimidazolone, benzthiazole, benztriazole, indole, quinoline, carbazole, acridine, benzene, naphthalene, anthracene, fluorene, phenanthrene and anthraquinone. In particular, the use of a heterocyclic residue containing at least any of an S, N or O heteroatom is preferable due to the superior dispersibility thereof.

Although examples ofY in general formula (1) and general formula (2) include optionally substituted alkylene groups, alkenylene groups and arylene groups having 20 carbon atoms or less, preferable examples include optionally substituted phenylene groups, biphenylene groups, naphthalene groups and alkylene groups of 10 carbons or less optionally having a side chain.

Examples of R₂ contained in Q of general formula (1) include optionally substituted alkyl groups, alkenyl groups and preferably those having 20 carbon atoms or less, while more preferable examples include alkyl groups of 10 atoms or less optionally having a side chain. Substituted alkyl groups or alkenyl groups refer to those in which a hydrogen atom of the alkyl group or alkenyl group is substituted with a halogen group such as a fluorine atom, chlorine atom or bromine atom, a hydroxyl group or a mercapto group and the like.

M in general formula (1) represents one equivalent of a monovalent to trivalent cation, and represents any of a hydrogen atom (proton), metal cation or quaternary ammonium cation. In addition, in the case the dispersant structure has two or more M, M may be only one of any of a proton, metal cation or quaternary ammonium cation or a combination thereof.
Examples of metals include lithium, sodium, potassium, calcium, barium, magnesium, aluminum, nickel and cobalt.
Examples of quaternary ammonium cations include a single compound having a structure represented by the following general formula (3) or a mixture thereof.

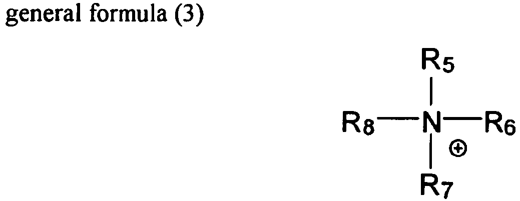

R₅, R₆, R₇ and R₈ represent any of a hydrogen atom, optionally substituted alkyl group, optionally substituted alkenyl group or optionally substituted aryl group.

R₅, R₆, R₇ and R₈ of general formula (3) may be respectively the same or different. In addition, in the case R₅, R₆, R₇ and R₈ have a carbon atom, the number of carbon atoms is 1 to 40, preferably 1 to 30 and more preferably 1 to 20. If the number of carbon atoms exceeds 40, electrode electroconductivity may decrease.

Specific examples of quaternary ammonium include, but are not limited to, dimethyl ammonium, trimethyl ammonium, diethyl ammonium, triethyl ammonium, hydroxyethyl ammonium, dihydroxyethyl ammonium, 2-ethylhexyl ammonium, dimethylaminopropyl ammonium, lauryl ammonium and stearyl ammonium.

### general formula (4)

R₉(̵X₈-Z)ₙ

X₈ represents a direct bond, -NH-, -O-, -CONH-, -SO₂NH-, -CH₂NH-, -CH₂NHCOCH₂NH-, -X₉-Y- or -X₉-Y X₁₀-, X₉ represents -CONH-, -SO₂NH-, -CH₂NH-, -NHCO- or -NHSO₂-, X₁₀ represents -NH- or -O-, and Y represents an optionally substituted alkylene group, optionally substituted alkenylene group or optionally substituted arylene group composed of 1 to 20 carbon atoms,
Z represents -SO₃M, -COOM or -P(O)(-OM)₂ and M represents one equivalent of a monovalent to trivalent cation, and
R₉ represents an organic pigment residue and n represents an integer of 1 to 4.

Examples of organic pigment residues represented by R₉ in general formula (4) include diketopyrrolopyrrole pigments, azo pigments such as azo, disazo or polyazo pigment, phthalocyanine pigments, anthraquinone pigments such as diaminodianthraquinone, anthrapyrimidine, flavanthrone, anthoanthrone, indanthrone, pyranthrone or violanthrone pigment, quinacridone pigments, dioxazine pigments, perynone pigments, perylene pigments, thioindigo pigments, isoindoline pigments, isoindolinone pigments, quinophthalone pigments, threne pigments and metal complex pigments. Light yellow anthraquinone residues not commonly referred to as pigments are included in the organic pigment residues represented by R₉. In particular, the use of an organic pigment residue that is not a metal complex pigment is preferable for enhancing the effect of inhibiting battery short-circuiting caused by metal, and the use of an azo pigment, diketopyrrolopyrrole pigment, inorganic metal phthalocyanine pigment, quinacridone pigment or dioxazine pigment is particularly preferable due to the superior dispersibility thereof.

M in the formula of general formula (4) represents one equivalent of a monovalent to trivalent cation, and represents any of a hydrogen atom (proton), metal cation or quaternary ammonium cation. In addition, in the case the dispersant structure has two or more M, M may be only one of any of a proton, metal cation or quaternary ammonium cation or a combination thereof
Examples of metals include lithium, sodium, potassium, calcium, barium, magnesium, aluminum, nickel and cobalt.
Examples of quaternary ammonium cations include a single compound having a structure represented by the following general formula (3) or a mixture thereof.

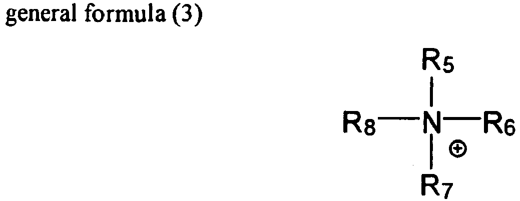

R₅, R₆, R₇ and R₈ represent any of a hydrogen atom, optionally substituted alkyl group, optionally substituted alkenyl group or optionally substituted aryl group.

R₅, R₆, R₇ and R₈ of general formula (3) may be respectively the same or different. In addition, in the case R₅, R₆, R₇ and R₈ have a carbon atom, the number of carbon atoms is 1 to 40, preferably 1 to 30 and more preferably 1 to 20. If the number of carbon atoms exceeds 40, electrode electroconductivity may decrease.

Specific examples of quaternary ammonium include, but are not limited to, dimethyl ammonium, trimethyl ammonium, diethyl ammonium, triethyl ammonium, hydroxyethyl ammonium, dihydroxyethyl ammonium, 2-ethylhexyl ammonium, dimethylaminopropyl ammonium, lauryl ammonium and stearyl ammonium.

Although there are no particular limitations on the method used to synthesize the dispersant described above, examples of methods that can be used include those described in Japanese Patent Publication Nos. S39-28884, S45-11026, S45-29755 or S64-5070 and Japanese Patent Application Laid-open No. 2004-217842.

The dispersant is thought to demonstrate dispersion effects as a result of the added dispersant acting on the surface of the carbon material (such as by adsorbing thereto). Completely or partially dissolving the organic pigment derivative having an acidic functional group or the triazine derivative having an acidic functional group in a solvent followed by adding the carbon material and mixing therein is thought to promote the action of these dispersants on the carbon material. Deaggregation of the carbon material is thought to occur as a result of electrical interaction (repulsion) attributable to polarization or dissociation of the acidic functional group possessed by the dispersant that has acted on the surface of the carbon material. Accordingly, the present invention allows the obtaining of satisfactory dispersion (1) without directly introducing (covalently bonding) a functional group to the surface of the carbon material and (2) without using a dispersing resin. On the basis thereof, satisfactory dispersion can be obtained without lowering the electroconductivity of the carbon material. The use of the composition for a battery of the present invention in which a carbon material is satisfactorily dispersed enables electrodes to be produced in which the carbon material is uniformly dispersed.

In addition, in an electrode using the composition for a battery of the present invention, together with the wettability of a carbon material to electrolyte improving due to the presence of a dispersant having an acidic functional group on the surface of the carbon material, the wettability of the electrode to the electrolyte also improves in coordination with the uniform dispersion effects described above.
Although the dispersant of the present invention has satisfactory dispersion effects and wettability improving effects, the effect of improving the wettability of the carbon material to the electrolyte is particularly large in the case M in the formula of general formula (1) or general formula (4) is a quaternary ammonium ion, thereby making this preferable.
In addition, in the case M is a proton, metal ions present in the electrolyte are captured by the acidic functional group, thereby inhibiting decreases in battery performance and short-circuiting caused by the precipitation of metal, and thus making this preferable as well.
In addition, in the case of using an organic solvent system, in which the donor number is less than 20 as will be described later, for the solvent system in which the dispersant is used, the use of a non-aqueous dispersant allows the obtaining of satisfactory dispersion, thereby making this preferable. This is thought to be due to increased solubility of the dispersant.

### <Solvent>

Examples of solvents used in the present invention include alcohols, glycols, cellusorbs, aminoalcohols, amines, ketones, carboxamides, phosphoric acid amides, sulfoxides, carboxylic acid esters, phosphoric acid esters, ethers, nitriles and water.

Among these, polar solvents having a relative permittivity of 15 or more are preferable. Relative permittivity is an indicator of the strength of polarity of a solvent, and is described in "Solvent Handbook", Asahara, et al., ed. (Kodansha Scientific, Ltd., 1990).
Examples of such solvents include, but are not limited to, methyl alcohol (relative permittivity: 33.1), ethyl alcohol (23.8), 2-propanol (18.3), 1-butanol (17.1), 1,2-ethanediol (38.66), 1.2-propanediol (32.0), 1,3-propanediol (35.0), 1,4-butanediol (31.1), diethylene glycol (31.69), 2-methoxyethanol (16.93), 2-ethoxyethanol (29.6), 2-aminoethanol (37.7), acetone (20.7), methyl ethyl ketone (18.51), formamide (111.0), N-methylformamide (182.4), N,N-dimethylformamide (36.71), N-methylacetoamide (191.3), N,N-dimethylacetoamide (37.78), N-methylpropionamide (172.2), N-methylpyrrolidone (32.0), hexamethyl phosphoric acid triamide (29.6), dimethylsulfoxide (48.9), sulfolane (43.3), acetonitrile (37.5), propionitrile (29.7) and water (80.1).

In particular, the use of a polar solvent having a relative permittivity of 15 to 200, preferably 15 to 100 and more preferably 20 to 100 is preferable for obtaining satisfactory dispersion stability of the carbon material.
Solvents having a relative permittivity of less than 15 frequently prevent the obtaining of satisfactory dispersion due to a prominent decrease in solubility of the solvent, and even if a solvent is used having a relative permittivity in excess of 200, there are many cases in which remarkable dispersion improving effects are not obtained.

In addition, a tendency was observed for the dispersion stability of the carbon material to also be affected by the electron donor ability of the solvent. Solvents having large electron donor effects are used preferably, and although solvents having a donor number of 15 Kcal/mol or more in particular are preferable, those having a donor number of 20 to 60 Kcal/mol are more preferable.

Donor number is a scale for measuring the strength of the electron donor ability of various solvents, and is defined as the molar enthalpy of a reaction with the donor when 10⁻³ M SbCl₅ in dichloroethane is selected for the reference acceptor, and the larger the value, the stronger the electron donor ability of the solvent. In addition, the donor numbers of several solvents are estimated indirectly from the ²³Na-NMR chemical shift of NaClO4 in the solvent. This donor number is described by V. Goodman (Ohtaki, Okada trans.) in "Donors and Acceptors" (Academic Publication Center, Ltd., 1983). Although varying according to the magnitude of the relative permittivity of a solvent, if a solvent is used having a donor number of less than 15 Kcal/mol, there are cases in which adequate dispersion stability may be unable to be obtained. In addition, remarkable dispersion improving effects are unlikely to be obtained even if a solvent is used having a donor number in excess of 60 Kcal/mol.

Examples of solvents having a donor number of 15 Kcal/mol or more include, but are not limited to, methyl alcohol (donor number: 19), ethyl alcohol (20), ethylamine (55), t-butylamine (57), ethylenediamine (55), pyridine (33.1), acetone (17), formamide (24), N,N-dimethylformamide (26.6), N,N-diethylformamide (30.9), N,N-dimethylacetoamide (27.8), N,N-diethylacetoamide (32.2), N-methylpyrrolidone (27.3), hexamethyl phosphoric acid triamide (38.8), dimethylsulfoxide (29.8), ethyl acetate (17.1), trimethyl phosphate (23), tributyl phosphate (23.7), tetrahydrofuran (20.0), isobutyronitrile (15.4), isopropionitrile (16.1) and water (18.0).

The use of a solvent having a large effect of promoting polarization or dissociation of an acidic functional group of the dispersant are thought to be important for obtaining satisfactory dispersion stability of the carbon material. Although the ease of polarization or dissociation of an acidic functional group is also influenced by the molecular structure of the organic pigment derivative or triazine derivative to which the acidic functional group is bound, since solvents having a large electron donor ability have strong solvation strength with respect to these derivatives, they are thought to promote polarization of dispersion acidic functional groups, and solvents having a large relative permittivity are thought to be promote dissociation of polarized acidic functional groups. Accordingly, the combined use of a solvent having a large specific permittivity and a solvent having a large donor number, or the use of a solvent having both a large relative permittivity and large donor number, is preferable for obtaining satisfactory dispersion stability of the carbon material.

In addition, the solvent used is preferably an aprotic polar solvent. An aprotic polar solvent refers to a self-dissociating or polar solvent which does not have the ability to release protons itself, and aggregation of aprotic polar solvents per se is weak due to a lack of the occurrence of self-association by hydrogen bonds. Consequently, they are expected to demonstrate dispersion promoting effects by strongly penetrating into aggregates of the carbon material. In addition, aprotic polar solvents have superior universality since they are able to dissolve various dispersants and resins due to their strong dissolving ability resulting from the solvents themselves exhibiting weak aggregation. Moreover, in the case of considering dissolving a dispersant selected from an organic pigment derivative having an acidic functional group or a triazine derivative having an acidic functional group in a solvent, an aprotic polar solvent only solvates cation species, thereby allowing it to only solvate protons or counter cations in acidic functional groups. At this time, since the anion side containing the organic pigment derivative or triazine derivative backbone remains exposed without being solvated, effects are expected such as less susceptibility to inhibition of the action of the organic pigment derivative or triazine derivative backbone on the surface of the carbon material.

In addition, in the case of further adding an electrode active substance or binder component and the like in addition to a dispersant selected from an organic pigment derivative having an acidic functional group or triazine derivative having an acidic functional group and a carbon material as an electroconductive assistant, selection of the solvent used in the present invention is preferably carried out by taking into consideration such as factors as reactivity with active substances and solubility with respect to the binder components in addition to the effects of the solvent on dispersibility as previously described. It is preferable to select the solvent which has high dispersibility, low reactivity with active substance and high solubility of binder components.

Moreover, a single solvent instead of a mixed solvent is used preferably in the case of recovering or recycling solvent discharged from the electrode production process in consideration of reducing the environmental burden, economic advantages and the like.

As has been described above, amide-based solvents, and particularly amide-based aprotic polar solvents such as N,N-dimethylformamide, N,N-diethylformamide, N,N-dimethylacetoamide, N,N-diethylacetomide, N-methylpyrrolidone or hexamethyl phosphoric acid amide, are used preferably as a solvent having universality when used alone that demonstrates dispersion stability promoting effects on the carbon material and satisfies requirements with respect to reactivity with active substances and solubility of binder components.

### <Positive Electrode Active Substance and Negative Electrode Active Substance>

In the case of using the composition of the present invention for a positive electrode composite or negative electrode composite, at least a positive electrode active substance or negative electrode active substance is included in addition to the dispersant, a carbon material as an electroconductive assistant and solvent described above.

There are no particular limitations on the positive electrode active substance used, and a metal oxide capable of being doped or intercalated with lithium ions, a metal oxide such as a metal sulfide or an electroconductive polymer and the like can be used, examples of which include oxides of transition metals such as Fe, Co, Ni or Mn, complex oxides with lithium, and inorganic compounds such as transition metal sulfides. Specific examples include transition metal oxide powders such as MnO, V₂O_{5,} V₆O₁₃ or TiO₂, complex oxide powders of lithium and a transition metal such as lithium nickel oxide, lithium cobalt oxide or lithium manganese oxide having a layered structure or lithium manganese oxide having a spinel structure, phosphoric acid compounds having an olivine structure in the form of lithium iron phosphate, and transition metal sulfide powders such as TiS₂ or FeS. In addition, electroconductive polymers such as polyaniline, polyacetylene, polypyrrole or polythiophene can also be used. In addition, the above-mentioned inorganic compounds and organic compounds may also be used as a mixture thereof.

There are no particular limitations on the negative electrode active substance used, and examples of active substances used include metal lithium, or alloys thereof, capable of being doped or intercalated with lithium ions, tin alloy or silicon alloy negative electrodes, metal oxide systems such as LiₓFe₂O₃, LiₓFe₃O₄ or LiₓWO₂, electroconductive polymers such as polyacetylene or poly-p-phenylene, amorphous carbonaceous materials such as soft carbon or hard carbon, and carbon-based materials such as carbonaceous powders including artificial graphite such as highly graphitized carbon or naturally-occurring graphite, carbon black, mesophase carbon black, resin-baked carbon materials, vapor growth carbon fibers or carbon fibers.

### <Binder>

The composition of the present invention preferably further contains a binder component. Examples of binder components include polymers or copolymers containing as a structural unit thereof ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal or vinyl pyrrolidone and the like; resins such as polyurethane resin, polyester resin, phenol resin, epoxy resin, phenoxy resin, urea resin, melamine resin, alkyd resin, acrylic resin, formaldehyde resin, silicon resin or fluorine resin; cellulose resins such as carboxymethyl cellulose; rubbers such as styrene-butadiene rubber or fluorine rubber, and electroconductive polymers such as polyaniline or polyacetylene. In addition, modified forms, mixtures and copolymers of these resins may also be used. In particular, polymer compounds containing a fluorine atom in a molecule thereof, such as polyvinylidene fluoride, polyvinyl fluoride or tetrafluoroethylene are used preferably in consideration of resistance.

In addition, the weight average molecular weight of these resins when used as a binder is preferably 10,000 to 1,000,000. If the molecular weight is excessively small, the resistance of the binder decreases. If the molecular weight is excessively large, although binder resistance is improved, the viscosity of the binder itself increases, which together with lowering workability, causes the binder to act as an aggregating agent resulting in considerable aggregation of composite components.

### <Applications of Composition of Present Invention>

The composition of the present invention can be used in a positive electrode composite or negative electrode composite. In the case of using in a positive electrode composite or negative electrode composite, it is preferably used in the form of a positive electrode or negative electrode composite paste by containing a positive electrode active substance or negative electrode active substance, and preferably also a binder, in a composition containing the above-mentioned dispersant, a carbon material as an electroconductive assistant and solvent.
The ratio of active substance within the total solid content of the electrode composite paste is 80% by weight or more and preferably 98.5% by weight or less. In addition, the ratio of the solid content combining at least one type of dispersant selected from an organic pigment derivative having an acidic functional group or a triazine derivative having an acidic functional group and a carbon material as an electroconductive assistant within the total solid content of the electrode composite paste preferably 0.5 to 19% by weight. The ratio of binder component in the total solid content of the electrode composite paste is preferably 1 to 10% by weight. In addition, although dependent upon the method used to coat the electrode composite paste, the proper viscosity of the electrode composite paste is typically preferably 100 to 30,000 mPa·s.

The positive and negative electrode composite pastes not only have superior dispersibility of electroconductive assistant in the form of carbon material particles, but also are effective in alleviating aggregation of positive and negative electrode active substances. Due to the superior dispersibility of the carbon material particles as an electroconductive assistant, energy during mixing and dispersion of the carbon material as an electroconductive assistant and the positive and negative electrode active substances in a solvent is efficiently transferred to the active substances without being inhibited by aggregation of the carbon material (electroconductive assistant), thereby resulting in improvement of dispersibility of the positive and negative electrode active substances.
In the positive electrode composite paste, the electroconductive assistant in the form of carbon material particles can be uniformly configured and adhered around the positive electrode active substance, thereby making it possible to contribute to superior electroconductivity and adhesion of the positive electrode composite layer. In addition, as a result of improving electroconductivity, the amount of the carbon material as an electroconductive assistant can be reduced, thereby making it possible to relatively increase the amount of positive electrode active substance added as well as increase capacity, an important characteristic of batteries.

Moreover, since aggregation of the positive electrode active substance and carbon material (electroconductive assistant) is extremely low in the positive electrode composite paste of the present invention, a smooth, highly uniform coated film can be obtained when coating onto a current collector, thereby improving adhesion between the current collector and the positive electrode composite. In addition, since a dispersant having an acidic functional group acts (such as by adsorption) on the surface of the carbon material (electroconductive assistant), interaction between the surface of a positive electrode active substance in the manner of a lithium-transition metal complex oxide and the surface of the carbon material (electroconductive assistant) is enhanced, thereby improving adhesion between the positive electrode active substance and carbon material (electroconductive assistant) as compared with the case of not using a dispersant having an acidic functional group.

In addition, in the negative electrode composite paste, in the case of using a carbon material-based active substance for the negative electrode active substance, aggregation of the carbon material-based active substance is alleviated due to the effects of the organic pigment derivative having an acidic functional group or triazine derivative having an acidic functional group added as a dispersant. The carbon material particles (electroconductive assistant) can also be uniformly configured and adhered around the negative electrode active substance, thereby making it possible to contribute to superior electroconductivity, adhesion and wettability of the negative electrode composite layer.

The composition of the present invention can also be used in an electrode foundation layer. In the case of using in an electrode foundation layer, although at least one type of dispersant selected from an organic pigment derivative having an acidic functional group or a triazine derivative having an acidic functional group, the carbon material as an electroconductive assistant, and the solvent can be used as is, the composition is preferably used in the form of an electrode foundation paste by adding a binder as described above. The ratio of the carbon material as an electroconductive assistant in the total solid content of the composition used in an electrode foundation layer is preferably 5 to 95% by weight and more preferably 10 to 90% by weight. If the amount of the carbon material as an electroconductive assistant is excessively low, the electroconductivity of the foundation layer may not be maintained, while if the amount of the carbon material as an electroconductive assistant is excessively high, the resistance of a coated film may decrease. In addition, although dependent upon the method used to coat the electrode foundation paste, the proper viscosity of the electrode foundation paste is typically preferably 100 to 30,000 mPa·s.

### <Production Process of Composition of Present Invention>

The following provides an explanation of a process for producing the composition of the present invention.
The composition of the present invention can be produced by, for example, dispersing the carbon material as an electroconductive assistant in a solvent in the presence of at least one type of dispersant selected from the organic pigment derivative having an acidic functional group or the triazine derivative having an acidic functional group, and mixing, as necessary, a positive electrode active substance, negative electrode active substance or binder component into the dispersion. The order in which each component is added is not limited thereto. In addition, a solvent be further added as necessary.

As a result of completely or partially dissolving at least one type of dispersant selected from the organic pigment derivative having an acidic functional group or the triazine derivative having an acidic functional group in the solvent followed by adding and mixing the carbon material as an electroconductive assistant to that solution, the above-mentioned production process disperses the dispersants in the solvent while allowing them to act on the carbon material (such as by being adsorbed thereto). Although varying according to physical property values characteristic of the carbon material, such as the specific surface area and amount of surface functional groups of the carbon material used, the concentration of the carbon material in the dispersion at this time is preferably 1 to 50% by weight and more preferably 5 to 35% by weight. If the concentration of the carbon material is excessively low, production efficiency becomes poor, while if the concentration of the carbon material is excessively high, the viscosity of the dispersion becomes remarkably high, thereby possibly lowering dispersion efficiency, efficiency of a contaminant removal step to be described later, and handling ease of the dispersion. In the case of incorporating a step for removing contaminants in particular, viscosity of the dispersion at this time is preferably 10,000 mPa·s or less, more preferably 5,000 mPa·s or less, and even more preferably 3,000 mPa·s or less.

The amount added of at least one type of dispersant selected from the organic pigment derivative having an acidic functional group and the triazine derivative having an acidic functional group is determined by the specific surface area and the like of the carbon material used as an electroconductive assistant. In general, the added amount is 0.5 to 40 parts by weight, preferably 1 to 35 parts by weight and more preferably 2 to 30 parts by weight based on 100 parts by weight of the carbon material. If the amount of dispersant added is excessively low, in addition to failing to obtain adequate dispersion effects, the effect of improving wettability by the electrolyte and the inhibitory effect on metal precipitation are not adequately obtained. In addition, remarkable dispersion improving effects are also not obtained even if added in excess.

The dispersed particle diameter of the carbon material as an electroconductive assistant is preferably reduced to a particle diameter of 0.03 to 2 µm, preferably 0.05 to 1 µm and more preferably 0.05 to 0.5 µm. If the dispersed particle diameter of the carbon material as an electroconductive assistant is less than 0.03 µm, it may be difficult to produce a composition thereof. In addition, if the dispersed particle diameter of the carbon material as an electroconductive assistant exceeds 2 µm, problems may occur such as requiring the amount of electroconductive assistant added to be increased due to fluctuations in the distribution of resistance in the electrodes or to lower resistance. Dispersed particle diameter as referred to here indicates the particle diameter that yields a value of 50% when calculated as the volume ratio of the particles starting with those having a small particle diameter within the volumetric particle size distribution thereof (D50), and is measured with a typical particle size distribution analyzer such as a particle size distribution analyzer using dynamic light scattering (such as the "MicroTrack UPA" manufactured by Nikkiso Co., Ltd.).

In addition, a disperser commonly used to disperse pigment and the like can be used as a device for dispersing the carbon material in the solvent while allowing the above-mentioned dispersants to act on the carbon material (such as by adsorbing thereto), examples of which include, but are not limited to, mixers such as a disper mixer, homomixer or planetary mixer, homogenizers (such as Clearmix or Primix manufactured by M Technique Ltd.), media-type dispersers such as a paint conditioner (Red Devil Inc.), ball mill, sand mill (such as "Dynomill" manufactured by Shinmaru Enterprises Ltd.), attriter, pearl mill (such as "DCP Mill" manufactured by Eirich) or coball mill, wet jet mills (such as Genus PY manufactured by Genus Co., Ltd., "Starburst" manufactured by Sugino Machine Ltd., or "Nanomizer" manufactured by Nanomizer Corp.), media-less dispersers such as "Clear SS-5" manufactured by M Technique Ltd. or "Micros" manufactured by Nara Machinery Co., Ltd. and rolling mills. In addition, dispersers subjected to treatment for preventing contamination by metal from the disperser are used preferably.

For example, in the case of using a media-type disperser, a method in which the agitator and vessel use a disperser made of ceramic or plastic, and a disperser in which a metal agitator and vessel surface are treated with tungsten carbide thermal spraying or plastic coating and the like are used preferably. Glass beads or ceramic beads such as zirconia beads or alumina beads are preferably used for the media, and zirconia beads are used particularly preferably. In addition, in the case of using a rolling mill, a ceramic roller is used preferably. Only one type of dispersion device may be used or a plurality of types of devices may be used in combination.

In addition, a step for removing contaminants such as metal foreign objects is preferably incorporated when dispersing the carbon material. Carbon materials such as carbon black, graphite and carbon fibers frequently contain metal foreign objects originating in the production process thereof (in the form of line contaminants and catalysts), and the removal of these metal foreign objects is extremely important to prevent short-circuiting of the battery. In the present invention, metal foreign objects can be more efficiently removed than in the case of not adding dispersant, even in cases of a high concentration of carbon material in the dispersion, since carbon material aggregates are finely broken up and the viscosity of the dispersion is low due to the effects of the dispersant selected from the organic pigment derivative having an acidic functional group or the triazine derivative having an acidic functional group. Examples of methods for removing metal foreign objects include removal of iron with a magnet, filtration and centrifugal separation.

An example of a method for adding the binder component consists of adding a solid binder component while stirring the dispersion obtained by dispersing the carbon material as an electroconductive assistant in the solvent in the presence of the dispersants described above followed by dissolving the solid binder component. In addition, a solution of the binder component dissolved in the solvent can be prepared in advance followed by mixing with the dispersant. Alternatively, the binder component may be added to the dispersant followed by re-dispersing with a dispersion device as described above.
In addition, dispersion treatment can also be carried out by simultaneously adding a portion or all of the binder component when dispersing the carbon material as an electroconductive assistant in the solvent in the presence of at least one type of dispersant selected from the organic pigment derivative having an acidic functional group or the triazine derivative having an acidic functional group.

An example of a method for adding the positive electrode active substance or negative electrode active substance consists of adding and dispersing the positive electrode active substance of negative electrode active substance while stirring a dispersion obtained by dispersing the carbon material as an electroconductive assistant in the solvent in the presence of the above-mentioned dispersants. In addition, dispersion treatment can also be carried out by simultaneously adding a portion or all of the positive electrode active substance or negative electrode active substance when dispersing the carbon material as an electroconductive assistant in the solvent in the presence of at least one type of dispersant selected from the organic pigment derivative having an acidic functional group or the triazine derivative having an acidic functional group. In addition, a disperser as previously described used for ordinary pigment dispersion and the like can be used for the device for carrying out mixing and dispersion at this time.

As has been described above, the composition for a battery of the present invention is normally produced, distributed and used in the form of a dispersion (liquid) or paste containing a solvent. This is because even if the electroconductive assistant, active substance and dispersant are mixed in the form of a dry powder, the dispersant is unable to uniformly act on the electroconductive assistant and active substance, while in a liquid phase method, by dispersing the electroconductive assistant and active substance in a solvent in the presence of a dispersant, the dispersant is able to uniformly act on the electroconductive assistant and active substance. In addition, as will be explained below, in the case of forming an electrode composite layer in a current collector, the liquid dispersion is preferably coated and dried as uniformly as possible.
However, it is also possible to consider the use of a dispersant produced using a liquid phase method, for example, in the form of a dry powder by removing the solvent for reasons such as transport costs and the like. This dry powder can then be re-dispersed with a suitable solvent and used to form an electrode composite layer. Thus, the composition of the present invention is not limited to a liquid, but rather may also be a composition in the form of a dry powder in this manner.

### <Lithium Secondary Battery>

The following provides an explanation of a lithium secondary battery using the composition of the present invention.
The lithium secondary battery is provided with a positive electrode having a positive electrode composite layer on a current collector, a negative electrode having a negative electrode composite layer on a current collector, and an electrolyte containing lithium. An electrode foundation layer may be formed between the positive electrode composite layer and the current collector and between the negative electrode composite layer and the current collector.
There are no particular limitations on the material or shape of the current collectors used in the electrodes, and although a metal such as aluminum, copper, nickel, titanium or stainless steel, or an alloy thereof, is used for the material, aluminum is used preferably for the positive electrode material while copper is used preferably for the negative electrode material. In addition, a foil on a flat plate is typically used for the shape, that having a roughened surface, that in the form of a porous foil or that that in the form of a mesh can also be used.

An example of a method for forming an electrode foundation layer on a current collector consists of coating and drying the previously described electrode foundation paste on the electrode current collector, there are no particular limitations on the film thickness of the electrode foundation layer provided it is within a range that maintains electroconductivity and adhesion, and is typically 0.05 to 20 µm and preferably 0.1 to 10 µm.

Examples of methods for forming an electrode composite layer on a current collector include directly coating and drying the electrode composite paste on the current collector, and forming an electrode foundation layer on a current collector followed by coating and drying the electrode composite layer. In addition, in the case of forming an electrode composite layer on an electrode foundation layer, an electrode foundation paste may be coated onto a current collector followed by over-coating an electrode composite paste while still wet and then drying. The thickness of the electrode composite layer is typically 1 to 500 µm and preferably 10 to 300 µm.

A known method can be used for the coating method without limitation. Specific examples of coating methods include die coating, dip coating, roll coating, doctor coating, spray coating, gravure coating, screen printing and electrostatic coating. In addition, rolling treatment may also be carried out following coating using a platen press or calendar roll.

### <Electrolyte>

A solution in which an electrolyte containing lithium is dissolved in a non-aqueous solvent is used for the electrolyte that composes the lithium secondary battery of the present invention. Examples of electrolytes include, but are not limited to, LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN and LiBPh₄.

There are no particular limitations on the non-aqueous solvent, examples of which include carbonates such as ethylene carbonate, propylene carbonate, butylene carbonate, dimethyl carbonate, ethyl methyl carbonate or diethyl carbonate, lactones such as γ-butyrolactone, γ-valerolactone or γ-octanoic lactone, glymes such as tetrahydrofuran, 2-methyltetrahydrofuran, 1,3-dioxolane, 4-methyl-1,3-dioxolane, 1,2-methoxyethane, 1,2-ethoxyethane or 1,2-dibutoxyethane, esters such as methyl formate, methyl acetate or methyl propionate, sulfoxides such as dimethylsulfoxide or sulfolane, and nitriles such as acetonitrile. In addition, although these solvents may each be used alone, they may also be used by mixing two or more types thereof.

Moreover, the electrolyte can also be retained in a polymer matrix to form a polymer electrolyte in the form of a gel. Examples of polymer matrices include, but are not limited to, acrylate resin having a polyalkylene oxide segment, polyphosphazene resin having a polyalkyene oxide segment and polysiloxane having a polyalkylene oxide segment.

Although there are no particular limitations on the structure of the lithium secondary battery using the composition of the present invention, it is normally composed of a positive electrode, negative electrode and separator provided as necessary, and can have various shapes corresponding to the purpose of use, such as paper, cylindrical, button or laminated shape. Examples

Although the following provides a more detailed explanation of the present invention based on the following examples, the present invention is not limited by these examples. In the examples, parts refer to parts by weight while % refers to percent by weight. A dynamic scattering type of particle size distribution analyzer ("MicroTrack UPA" manufactured by Nikkiso Co., Ltd.) was used to measure particle size distribution of carbon dispersions, and the resulting volumetric particle size distributions were used to determine the particle diameter that yields a value of 50% when calculated as the volume ratio of the particles starting with those having a small particle diameter (D50). However, the particle size distribution of carbon dispersions using carbon nanofibers for the electroconductive assistant was determined by evaluating with a grind gauge (in compliance with JIS K5600-2-5). In addition, the particle size distributions of electrode composite pastes were also determined by evaluating with a grind gauge (in compliance with JIS K5600-2-5).

### <Dispersant Structure and Solubility>

The structures and solubility in water of the dispersants used in the examples are indicated in Tables 1 to 4. Evaluations of solubility were carried out by evaluating dispersants having solubility in purified water of 0.02% or more as "O" (soluble) and those having solubility of less than 0.02% as "x" (insoluble).

**Table 1**

| Dispersant Symbol | Dispersant Structure |
|---|---|
| A | 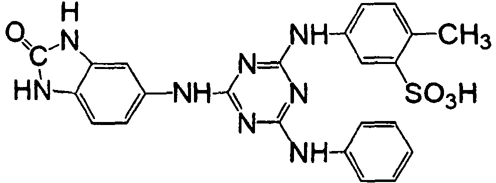 |
| | Salt forming substance: None Solubility in water: ○ |
| B | 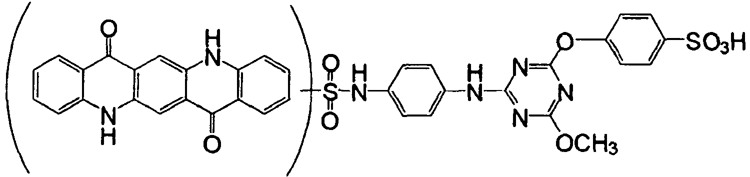 |
| | Salt forming substance: None Solubility in water: ○ |
| C | 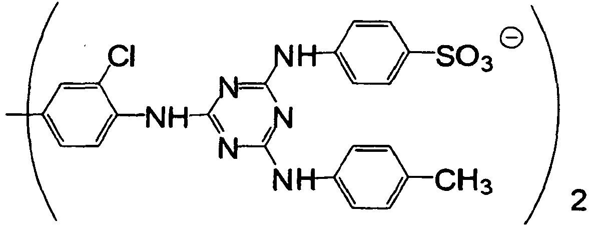 |
| | Salt forming substance: Potassium Solubility in water: ○ |
| D | 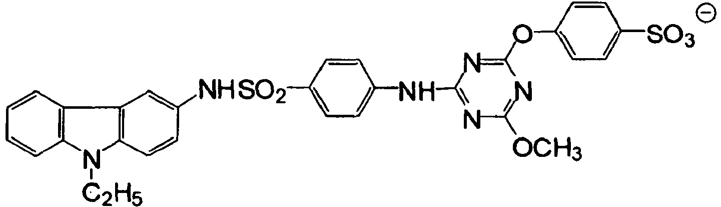 |
| | Salt forming substance: Triethyl ammonium |
| | Solubility in water:○ |

**Table 2**

| Dispersant Symbol | Dispersant Structure |
|---|---|
| E | 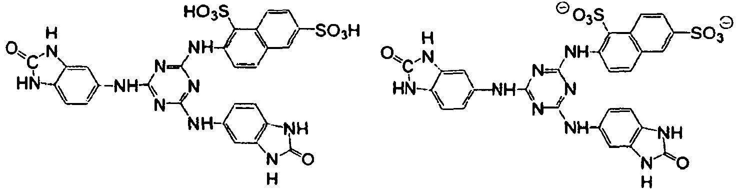 |
| | 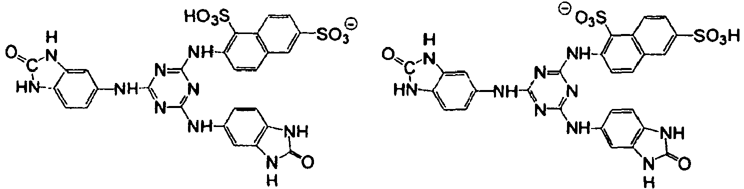 |
| | Salt forming substance: Octyl ammonium |
| | Solubility in water: × |
| F | 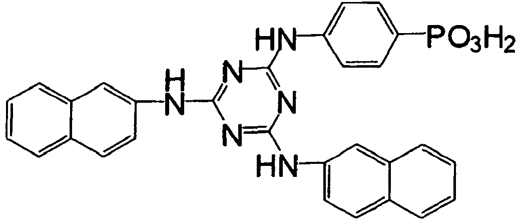 |
| | Salt forming substance: None Solubility in water: ○ |
| G | 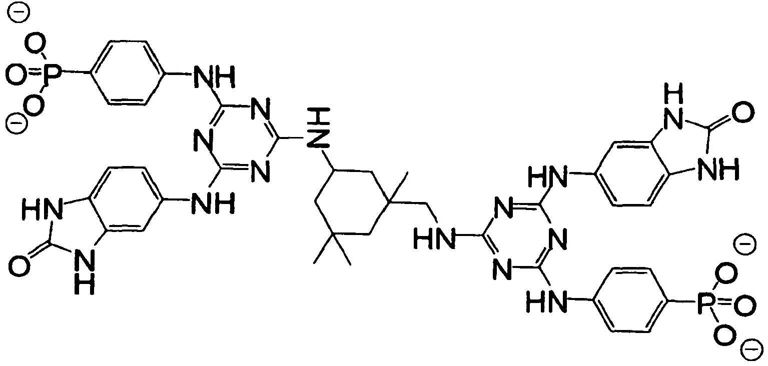 |
| | Salt forming substance: Lauryl ammonium |
| | solubility in water: × |

Dispersant E: Mixture of indicated compounds (containing 0.5 equivalents of octyl ammonium based on total amount of sulfonic acid groups)

**Table 3**

| Dispersant Symbol | Dispersant Structure |
|---|---|
| H | 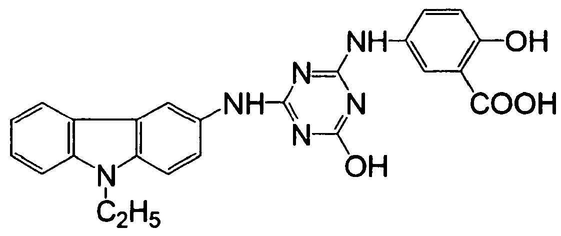 |
| | Salt forming substance: None Solubility in water: ○ |
| I | 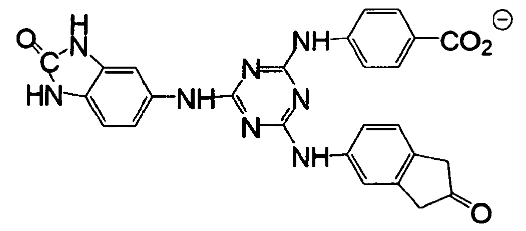 |
| | Salt forming substance: Lauryl ammonium |
| | Solubility in water: × |
| J | 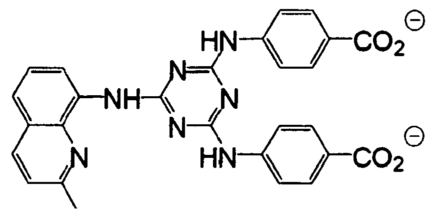 |
| | Salt forming substance: Dioctyl ammonium |
| | Solubility in water: × |
| K | 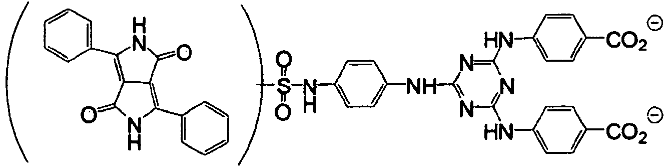 |
| | Salt forming substance: Stearyl ammonium |
| | Solubility in water: × |
| L | 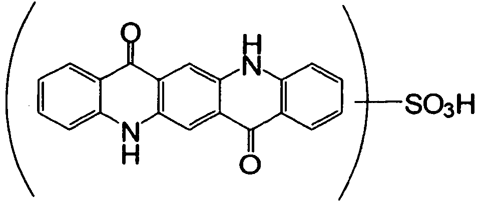 |
| | Salt forming substance: None Solubility in water: ○ |

**Table 4**

| Dispersant Symbol | Dispersant Structure |
|---|---|
| M | 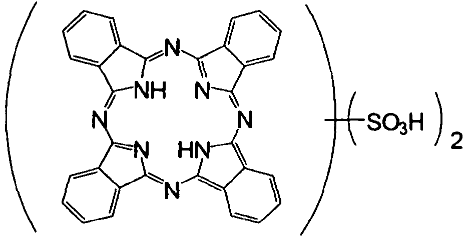 |
| | Salt forming substance: None Solubility in waster: ○ |
| N | 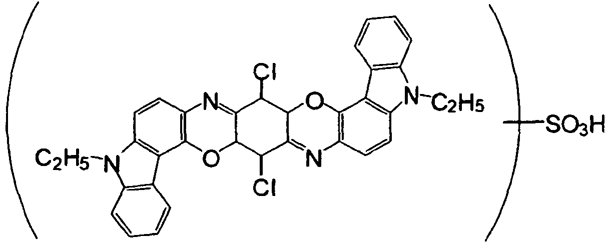 |
| | Salt forming substance: None Solubility in water: ○ |
| O | 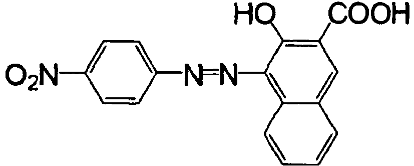 |
| | Salt forming substance: None Solubility in water: ○ |
| P | 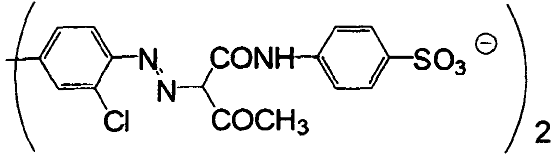 |
| | Salt forming substance: Potassium Solubility in water: ○ |
| Q | 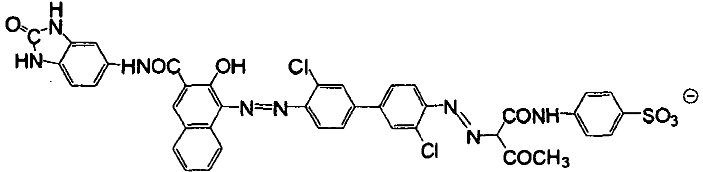 |
| | Salt forming substance: Lauryl ammonium |
| | Solubility in water: × |

### <Preparation of Carbon Dispersion for Electroconductive Assistant>

### [Carbon Dispersions 1 to 21, 23 to 27 and 29]

89.5 parts of various solvents and 0.5 parts of any of the dispersants A to Q shown in Tables 1 to 4 were placed in a glass bottle according to the compositions shown in Tables 5 and 6 followed by mixing and stirring to completely or partially dissolve the dispersants. Next, 10 parts of carbon serving as an electroconductive assistant were added followed by the addition of media in the form of zirconia beads and dispersing with a paint shaker to obtain a carbon dispersion.
Commercially available acetylene black (Denka Black HS-100, primary particle diameter: 48 nm, specific surface area: 48 m²/g, manufactured by Denki Kagaku Kogyo), furnace black (Toka Black #5400, primary particle diameter: 21 nm, specific surface area: 170 m²/g, manufactured by Tokai Carbon) or carbon nanofibers ("VGCF", fiber length: 10 to 20 µm, fiber diameter: 150 nm, specific surface area: 13 m²/g, manufactured by Showa Denko) was used for the carbon.

### [Carbon Dispersion 22]

9 parts of ethylenediamine, 80.5 parts of methanol and 0.5 parts of dispersant in the form of dispersant A shown in Table 1 were placed in a glass bottle followed by mixing and stirring to completely or partially dissolve the dispersant. Next, 10 parts of acetylene black (Denka Black HS-100, primary particle diameter: 48 nm, specific surface area: 48 m²/g, manufactured by Denki Kagaku Kogyo) were added followed by the addition of media in the form of zirconia beads and dispersing with a paint shaker to obtain a carbon dispersion.

### [Carbon Dispersion 28]

88.0 parts of N-methyl-2-pyrrolidone and 2.0 parts of a dispersant in the form of dispersant A shown in Table 1 were charged into a glass bottle according to the composition shown in Table 6 followed by mixing and stirring to completely or partially dissolve the dispersant. Next, 10 parts of carbon black in the form of ketjen black (EC-300J, specific surface area: 800 m²/g, manufactured by Akzo) serving as an electroconductive assistant were added followed by the addition of media in the form of zirconia beads and dispersing with a paint shaker to obtain a carbon dispersion.

### [Carbon Dispersions 30 to 34] (Dispersant Not Used)

89.5 parts of N-methyl-2-pyrrolidone or 89.5 parts of purified water and 10.5 parts of carbon serving as an electroconductive assistant were placed in a glass bottle according to the composition shown in Table 6 followed by the addition of media in the form of zirconia beads and dispersing with a paint shaker to obtain a carbon dispersion.
Commercially available acetylene black (Denka Black HS-100, primary particle diameter: 48 nm, specific surface area: 48 m²/g, manufactured by Denki Kagaku Kogyo), furnace black (Toka Black #5400, primary particle diameter: 21 nm, specific surface area: 170 m²/g, manufactured by Tokai Carbon), ketjen black (EC-300J, specific surface area: 800 m²/g, manufactured by Akzo), or carbon nanofibers (CNF) ("VGCF", fiber length: 10 to 20 µm, fiber diameter: 150 nm, specific surface area: 13 m²/g, manufactured by Showa Denko) was used for the carbon.

### [Carbon Dispersions 35 and 36]

89.5 parts of N-methyl-2-pyrrolidone and 0.5 parts of a dispersant in the form of a surfactant were placed in a glass bottle according to the compositions shown in Table 6 followed by mixing and stirring to dissolve the dispersant. Next, 10 parts of an electroconductive assistant in the form of acetylene black (Denka Black HS-100, primary particle diameter: 48 nm, specific surface area: 48 m²/g, manufactured by Denki Kagaku Kogyo) were added followed by the addition of media in the form of zirconia beads and dispersing with a paint shaker to obtain a carbon dispersion.
A nonionic surfactant (Emulgen A-60, polyoxyethylene derivative, Kao) or an anionic surfactant (Demol N, sodium salt of β-naphthalene sulfonate-formalin condensation product, Kao) was used for the surfactant.

### [Carbon Dispersion 37]

88.0 parts of N-methyl-2-pyrrolidone and 2.0 parts of a dispersant in the form of an anionic surfactant (Demol N, sodium salt of β-naphthalene sulfonate-formalin condensation product, Kao) were placed in a glass bottle according to the composition shown in Table 6 followed by mixing and stirring to dissolve the dispersant. Next, 10 parts of an electroconductive assistant in the form of acetylene black (Denka Black HS-100, primary particle diameter: 48 nm, specific surface area: 48 m²/g, manufactured by Denki Kagaku Kogyo) were added followed by the addition of media in the form of zirconia beads and dispersing with a paint shaker to obtain a carbon dispersion.

### [Carbon Dispersions 38 and 39]

89.5 parts of N-methyl-2-pyrrolidone and 0.5 parts of a dispersing resin in the form of polyvinyl pyrrolidone (weight average molecular weight: approx. 80,000, Nippon Shokubai) were placed in a glass bottle according to the compositions shown in Table 6 followed by mixing and stirring to dissolve. Next, 10 parts of carbon were added followed by the addition of media in the form of zirconia beads and dispersing with a paint shaker to obtain a carbon dispersion.
Commercially available acetylene black (Denka Black HS-100, primary particle diameter: 48 nm, specific surface area: 48 m²/g, manufactured by Denki Kagaku Kogyo) or furnace black (Toka Black #5400, primary particle diameter: 21 nm, specific surface area: 170 m²/g, manufactured by Tokai Carbon) was used for the carbon.

### <Evaluation of Wettability of Dispersed Carbon>

The wettability of the carbon following dispersion treatment was evaluated for carbon dispersions 3 to 19, 27, 28, 30, 32 and 33.
After distilling off the solvent of each carbon dispersion under reduced pressure with an evaporator, the resulting residue was vacuum-dried for 10 hours at 80°C. Continuing, the dried product was crushed with an agate mortar followed by further vacuum-drying for 12 hours at 80°C. After again crushing the resulting dried product with an agate mortar, carbon pellets were produced with a pellet forming machine (Specac) while applying a load of 500 kgf/cm² (tablet diameter: 10 mm, thickness: 0.5 mm). Droplets comprising a 1:1 mixture of ethylene carbonate and diethyl carbonate were dropped onto the pellets with a microsyringe and the amount of time required for the droplets to penetrate into the pellets was measured. This measurement was repeated five times for each sample and samples having an average penetration time of less than 1 second were evaluated as "⊗", those having an average penetration time of 1 to less than 5 seconds were evaluated as "○", those having an average penetration time of 5 to less than 10 seconds were evaluated as "Δ", and those having average penetration time of 10 seconds or more were evaluated as "x".

The compositions of the carbon dispersions, dispersion evaluation results and results of evaluating the wettability of the dispersed carbon are shown in Tables 5 and 6. The abbreviations used in the table have the meanings indicated below.
DN: Solvent donor number
DMSO: Dimethylsulfoxide
DMF: N,N-dimethylformamide
NMP: N-methyl-2-pyrrolidone
CNF: Carbon nanofibers

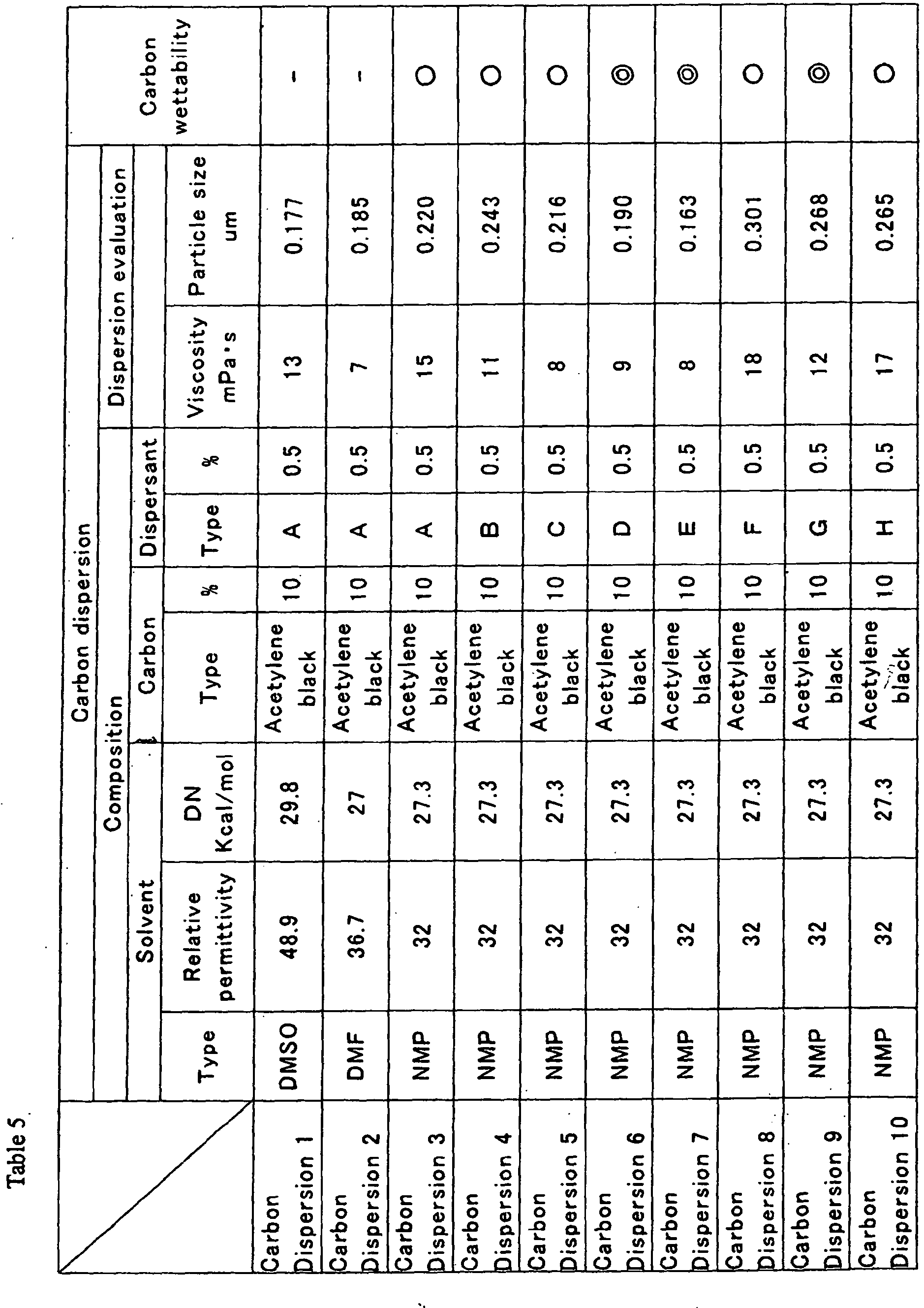

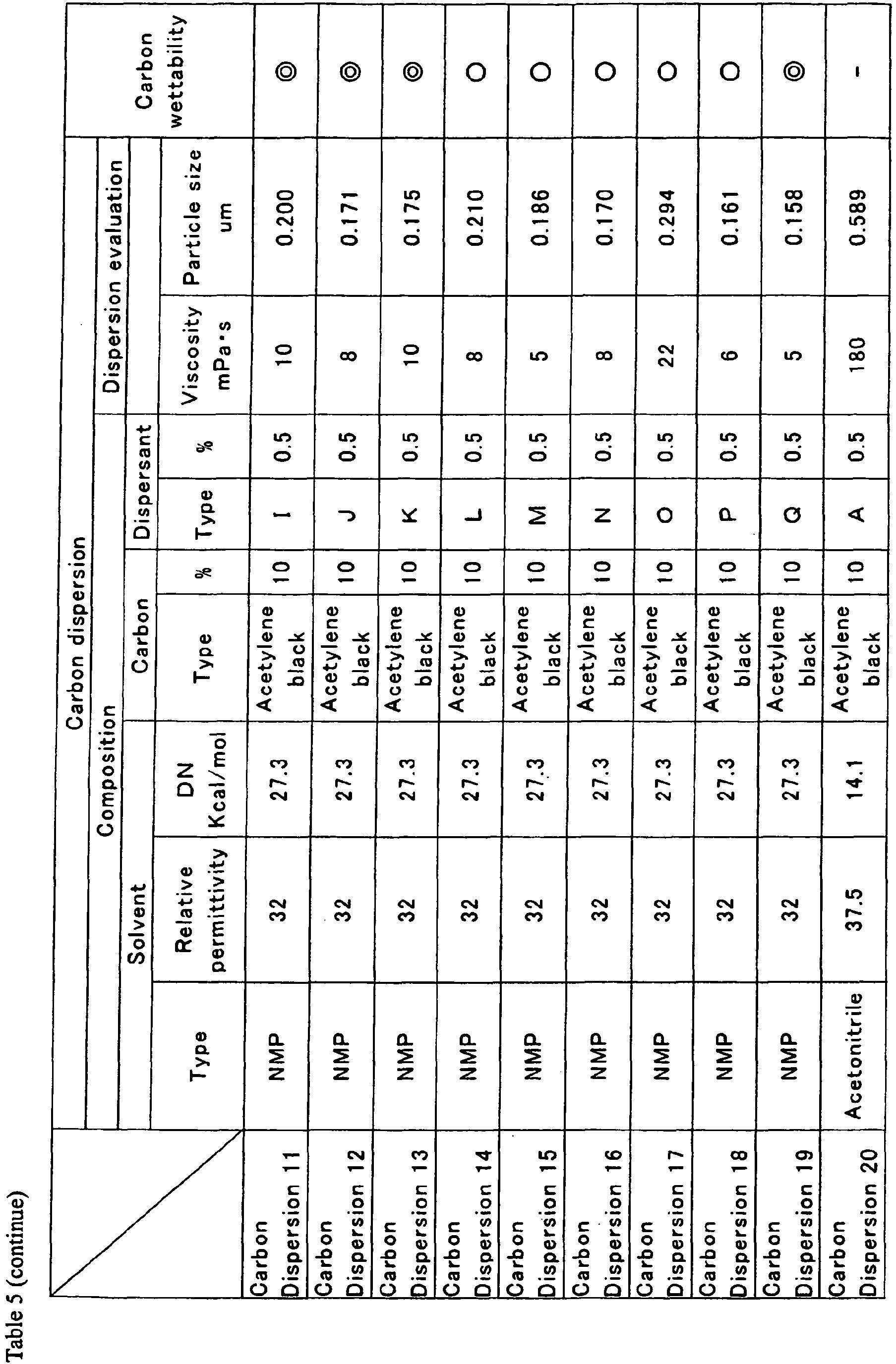

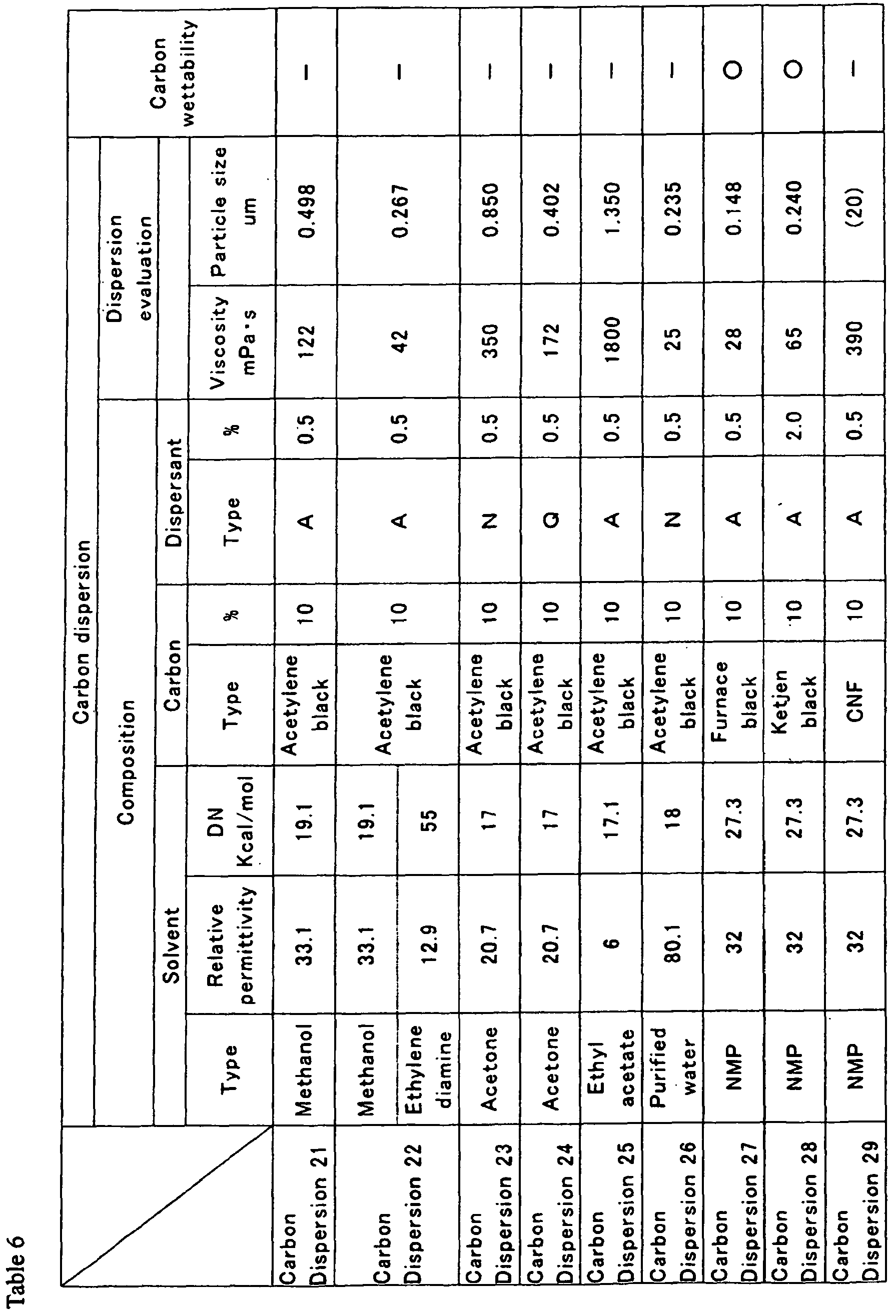

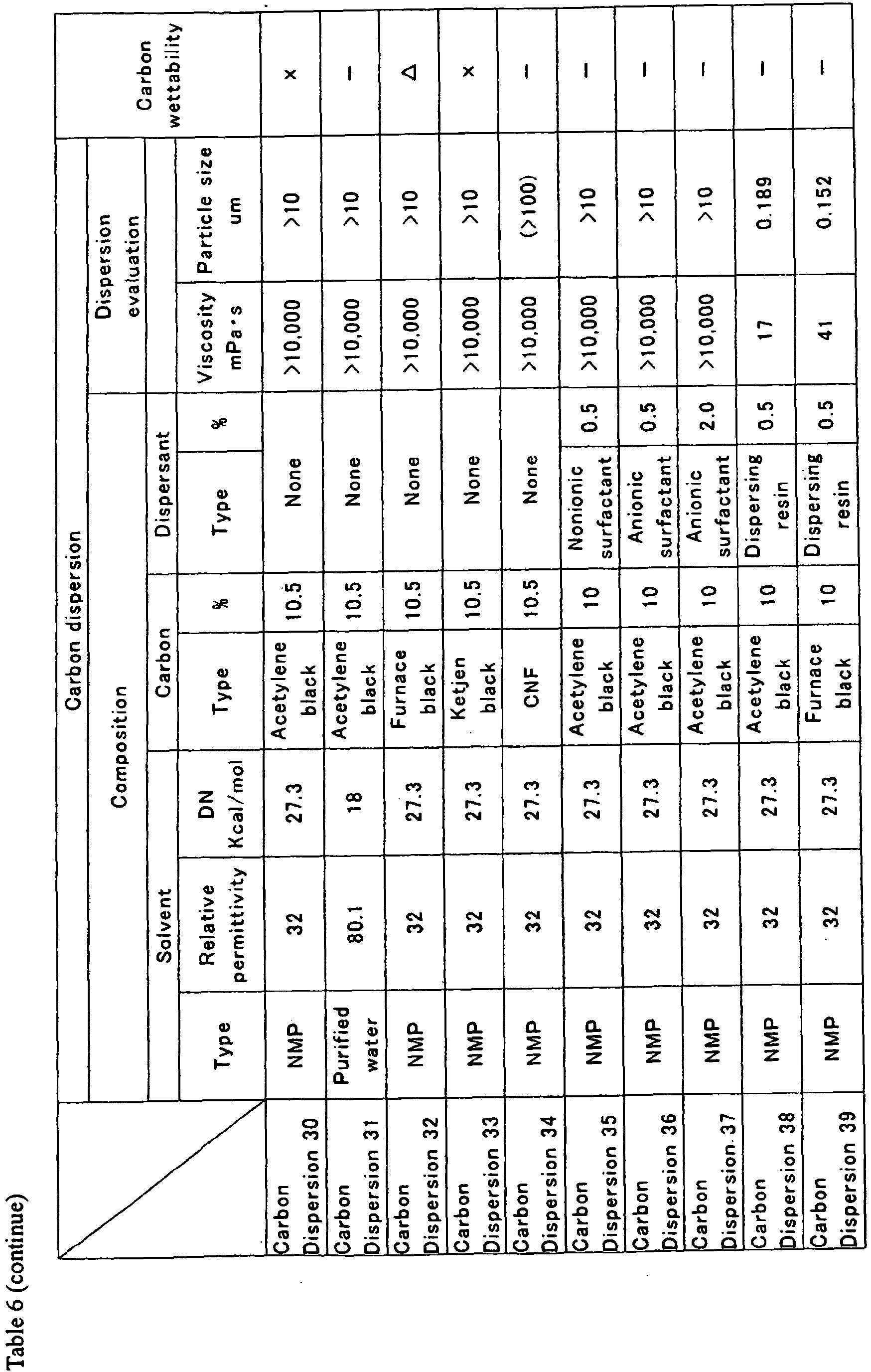

Carbon dispersions using dispersants A to Q (dispersions 1 to 29) were determined to have satisfactory dispersibility, low viscosity and small dispersed particle size in comparison with the case of not using a dispersant (dispersions 30 to 34) and the case of using an ordinary surfactant (dispersions 35 to 37). In addition, dispersibility in non-water-soluble dispersant was determined to be satisfactory in solvent systems in which the donor number was below 20. Moreover, dispersion time-based stability (50°C x 3 days) was also satisfactory for dispersions 1 to 29, and increases in viscosity and occurrence of aggregation were not observed.
In addition, in those dispersions using a dispersant of the present invention, the wettability of the carbon to electrolyte was improved in comparison with the case of not using a dispersant. The effect of improving wettability was particularly large in the case of using a dispersant in which the acidic functional group of the dispersant was of the ammonium salt type.

### <preparation of Positive Electrode Composite Paste for Lithium Secondary Battery>

### [Examples 1 and 2]

After kneading 90 parts of a positive electrode active substance in the form of lithium cobalt oxide LiCoO₂ (HLC-22, mean particle diameter: 6.6 µm, specific surface area: 0.62 m²/g, manufactured by Honjo Chemical), 4.75 parts of a binder in the form of polyvinylidene fluoride (KF Polymer, manufactured by Kureha) and 21.9 parts of solvent in the form of dimethylsulfoxide or dimethylformamide with a planetary mixer, 50 parts of any of the previously prepared carbon dispersions (carbon content: 5 parts) were added followed by kneading to obtain a positive electrode composite paste. The carbon dispersions used in each of the examples are shown in Table 7.

### [Examples 3 to 26 and 29 and Comparative Examples 5, 6 and 8]

After kneading 90 parts of a positive electrode active substance in the form of lithium cobalt oxide LiCoO₂ (HLC-22, mean particle diameter: 6.6 µm, specific surface area: 0.62 m²/g, manufactured by Honjo Chemical), 4.75 parts of a binder in the form of polyvinylidene fluoride (KF Polymer, manufactured by Kureha) and 21.9 parts of solvent in the form of N-methyl-2-pyrrolidone with a planetary mixer, 50 parts of any of the previously prepared carbon dispersions (carbon content: 5 parts) were added followed by kneading to obtain a positive electrode composite paste. The carbon dispersions used in each of the examples and comparative examples are shown in Tables 7 to 9.

### [Comparative Examples 1 to 4]

After kneading 90 parts of a positive electrode active substance in the form of lithium cobalt oxide LiCoO₂ (HLC-22, mean particle diameter: 6.6 µm, specific surface area: 0.62 m²/g, manufactured by Honjo Chemical), 5 parts of a binder in the form of polyvinylidene fluoride (KF Polymer, manufactured by Kureha) and 24 parts of N-methyl-2-pyrrolidone with a planetary mixer, 47.6 parts of any of the previously prepared carbon dispersions (carbon content: 5 parts) were added followed by kneading to obtain a positive electrode composite paste. The carbon dispersions used in each of the comparative examples are shown in Table 9.

### [Example 28 and Comparative Example 7]

After kneading 90 parts of a positive electrode active substance in the form of lithium cobalt oxide LiCoO₂ (HLC-22, mean particle diameter: 6.6 µm, specific surface area: 0.62 m²/g, manufactured by Honjo Chemical), 4.0 parts of a binder in the form of polyvinylidene fluoride (KF Polymer, manufactured by Kureha) and 22.7 parts of N-methyl-2-pyrrolidone with a planetary mixer, 50 parts of any of the previously prepared carbon dispersions (carbon content: 5 parts) were added followed by kneading to obtain a positive electrode composite paste. The carbon dispersions used in the example and comparative example are shown in Tables 8 or 9.

### [Example 27]

81.8 parts of N-methyl-2-pyrrolidone and 0.25 parts of a dispersant in the form of dispersant A shown in Table 1 were placed in a glass bottle followed by mixing and stirring to completely or partially dissolve the dispersant. Next, 5 parts of carbon in the form of furnace black serving as an electroconductive assistant (Toka Black #5400, primary particle diameter: 21 nm, specific surface area: 170 m²/g, manufactured by Tokai Carbon), 90 parts of a positive electrode active substance in the form of lithium cobalt oxide LiCoO₂ (HLC-22, mean particle diameter: 6.6 µm, specific surface area: 0.62 m²/g, manufactured by Honjo Chemical) and 4.75 parts of a binder in the form of polyvinylidene fluoride (KF Polymer, manufactured by Kureha) were added followed by the addition of media in the form of zirconia beads and dispersing with a paint shaker to obtain a positive electrode composite paste (see Table 8).

### [Examples 30 and 31 and Comparative Example 9]

After kneading 85 parts of a positive electrode active substance in the form of lithium manganese oxide LiMn₂O₄ (Cellseed S-LM, mean particle diameter: 12 µm, specific surface area: 0.48 m²/g, manufactured by Nippon Chemical Industrial), 5.55 parts of a binder in the form of polyvinylidene fluoride (KF Polymer, manufactured by Kureha) and 26 parts of a previously prepared carbon dispersion (carbon content: 2.6 parts) with a planetary mixer, 64 parts of a previously prepared carbon dispersion (carbon content: 6.4 parts) were added followed by kneading to obtain a positive electrode composite paste. The carbon dispersions used in the examples and comparative example are shown in Table 9.

### [Examples 32 and 33]

After kneading 91 parts of a positive electrode active substance, 4.8 parts of a binder in the form ofpolyvinylidene fluoride (KF Polymer, manufactured by Kureha) and 30.6 parts of N-methyl-2-pyrrolidone with a planetary mixer, 40 parts of the previously prepared carbon dispersion (3) (carbon content: 4 parts) were added followed by kneading to obtain a positive electrode composite paste.
Lithium nickel oxide LiNiO₂ (manufactured by Tanaka Chemical) or lithium iron phosphate LiFePO₄ (mean particle diameter: 3.6 µm, specific surface area: 15 m²/g, manufactured by Tianjin STL Energy Technology) was used for the positive electrode active substance. The positive electrode active substances used in each example are shown in Table 9.

### [Comparative Examples 10 and 11]

After kneading 91 parts of a positive electrode active substance, 5 parts of a binder in the form of polyvinylidene fluoride (KF Polymer, manufactured by Kureha) and 32.5 parts of N-methyl-2-pyrrolidone with a planetary mixer, 38.1 parts of the previously prepared carbon dispersion (30) (carbon content: 4 parts) were added followed by kneading to obtain a positive electrode composite paste.
Lithium nickel oxide LiNiO₂ (manufactured by Tanaka Chemical) or lithium iron phosphate LiFePO₄ (mean particle diameter: 3.6 µm, specific surface area: 15 m²/g, manufactured by Tianjin STL Energy Technology) was used for the positive electrode active substance. The positive electrode active substances used in each comparative example are shown in Table 9.

### <Preparation of Negative Electrode Composite Paste for Lithium Secondary Battery>

### [Examples 35 to 48 and 50 to 52 and Comparative Example 16]

After kneading 93 parts of a negative electrode active substance in the form of mesophase carbon MFC (MCBC6-28, mean particle diameter: 5 to 7 µm, specific surface area: 4 m²/g, manufactured by Osaka Gas Chemicals), 4.9 parts of a binder in the form of polyvinylidene fluoride (KF Polymer, manufactured by Kureha) and 20 parts of a previously prepared carbon dispersion (carbon black content: 2 parts) with a planetary mixer, 48.8 parts of N-methyl-2-pyrrolidone were added followed by kneading to obtain a negative electrode composite paste. The carbon dispersions used in the examples and comparative examples are shown in Table 10.

### [Comparative Example 14]

After kneading 93 parts of a negative electrode active substance in the form of mesophase carbon MFC (MCMB6-28, mean particle diameter: 5 to 7 µm, specific surface area: 4 m²/g, manufactured by Osaka Gas Chemicals), 5 parts of a binder in the form of polyvinylidene fluoride (KF Polymer, manufactured by Kureha) and 19 parts of the previously prepared carbon dispersion (30) (carbon black content: 2 parts) with a planetary mixer, 49.7 parts of N-methyl-2-pyrrolidone were added followed by kneading to obtain a negative electrode composite paste (see Table 10).

### [Example 49]

After kneading 93 parts of a negative electrode active substance in the form of mesophase carbon MFC (MCMB6-28, mean particle diameter: 5 to 7 µm, specific surface area: 4 m²/g, manufactured by Osaka Gas Chemicals), 1 part of a binder in the form of carboxymethyl cellulose (Sunrose F300MC, manufactured by Nippon Paper Chemicals), 4 parts of styrene butadiene rubber (TRD2001, manufactured by JSR) and 20 parts of the previously prepared carbon dispersion (26) (carbon black content: 2 parts) with a planetary mixer, 48.7 parts of purified water were added followed by kneading to obtain a negative electrode composite paste (see Table 10).

### [Comparative Example 15]

After kneading 93 parts of a negative electrode active substance in the form of mesophase carbon MFC (MCMB6-28, mean particle diameter: 5 to 7 µm, specific surface area: 4 m²/g, manufactured by Osaka Gas Chemicals), 1 part of a binder in the form of carboxymethyl cellulose (Sunrose F300MC, manufactured by Nippon Paper Chemicals), 4 parts of styrene butadiene rubber (TRD2001, manufactured by JSR) and 19 parts of the previously prepared carbon dispersion (31) (carbon black content: 2 parts) with a planetary mixer, 49.7 parts of purified water were added followed by kneading to obtain a negative electrode composite paste (see Table 10).

### [Example 53]

82 parts of N-methyl-2-pyrrolidone and 0.1 parts of a dispersant in the form of dispersant Q shown in Table 1 were placed in a glass bottle followed by mixing and stirring to completely or partially dissolve the dispersant. Next, 2 parts of carbon in the form of acetylene black serving as an electroconductive assistant (Denka Black HS-100, primary particle diameter: 48 nm, specific surface area: 48 m²/g, manufactured by Denki Kagaku Kogyo), 93 parts of a negative electrode active substance in the form of mesophase carbon MFC (MCMB6-28, mean particle diameter: 5 to 7 µm, specific surface area: 4 m²/g, manufactured by Osaka Gas Chemicals) and 4.9 parts of a binder in the form of polyvinylidene fluoride (KF Polymer, manufactured by Kureha) were added followed by the further addition of media in the form zirconia beads and dispersing with a paint shaker to obtain a negative electrode composite paste (see Table 10).

### <Preparation of Electrode Foundation Paste>

### [Examples 34 and 54]

100 parts of an N-methyl-2-pyrrolidone solution (solid content: 10%) ofpolyvinylidene fluoride (KF Polymer, manufactured by Kureha) were added to 100 parts of carbon dispersion (27) (carbon content: 10 parts) followed by stirring and mixing with a high-speed disperser to obtain an electroconductive foundation layer paste (see Tables 11 and 12).

### [Comparative Examples 12 and 17]

100 parts of an N-methyl-2-pyrrolidone solution (solid content: 10%) of polyvinylidene fluoride (KF Polymer, manufactured by Kureha) and 4.8 parts of N-methyl-2-pyrrolidone were added to 95.2 parts of carbon dispersion (32) (carbon content: 10 parts) followed by stirring and mixing with a high-speed disperser to obtain an electroconductive foundation layer paste (see Tables 11 and 12).

### [Comparative Examples 13 and 18]

100 parts of an N-methyl-2-pyrrolidone solution (solid content: 10%) of polyvinylidene fluoride (KF Polymer, manufactured by Kureha) were added to 100 parts of carbon dispersion (39) (carbon black content: 10 parts) followed by stirring and mixing with a high-speed disperser to obtain an electroconductive foundation layer paste (see Tables 11 and 12).

### <Production of Electrode for Lithium Secondary Battery>

### [Examples 1 to 33 and Comparative Examples 1 to 11]

A previously prepared positive electrode composite paste was coated onto a current collector in the form of aluminum foil having a thickness of 20 µm with a doctor blade coater followed by heated vacuum drying and rolling treatment to produce a positive electrode composite layer having a thickness of 100 µm.

### [Example 34 and Comparative Examples 12 and 13]

A previously prepared electrode foundation layer paste was coated onto aluminum foil having a thickness of 20 µm using a doctor blade coater followed by heated vacuum drying to produce an electrode foundation layer having a thickness of 2 µm. Continuing, the positive electrode composite paste prepared in Comparative Example 1 was coated onto the electrode foundation layer with a doctor blade coater followed by heated vacuum drying to produce a positive electrode composite layer having a thickness of 100 µm. Rolling treatment was carried out using a roller press and the like (see Table 11).

### [Examples 55 to 71 and Comparative Example 19]

The positive electrode composite pastes used in Examples 3 to 19 and Comparative Example 1 were coated onto both sides of aluminum foil having a thickness of 20 µm followed by heated vacuum drying and rolling treatment to produce positive electrode composite layers (see Table 13).

### <Production of Negative Electrode for Lithium Secondary Battery>

### [Examples 35 to 53 and Comparative Examples 14 to 16]

Each previously prepared negative electrode composite paste was coated onto a current collector in the form of copper foil having a thickness of 20 µm using a doctor blade coater followed by heated vacuum drying and rolling treatment to produce a negative electrode composite layer having a thickness of 100 µm.

### [Example 54 and Comparative Examples 17 and 18]

Each previously prepared electrode foundation layer paste was coated onto copper foil having a thickness of 20 µm using a doctor blade coater followed by heated vacuum drying to produce an electrode foundation layer having a thickness of 2 µm. Next, the negative electrode composite paste prepared in Comparative Example 14 was coated was coated onto the electrode foundation layer with a doctor blade coater followed by heated vacuum drying to produce a negative electrode composite layer having a thickness of 100 µm. Rolling treatment was carried out with a roller press and the like (see Table 12).

### [Examples 55 to 71 and Comparative Example 19]

The negative electrode composite pastes used in Examples 35 to 48 and 50 to 52 and in Comparative Example 14 were coated onto both sides of copper foil having a thickness of 20 µm followed by rolling treatment to produce negative electrode composite layers (see Table 13).

### <Assembly of Cell for Evaluating Lithium Secondary Battery Positive Electrodes>

### [Examples 1 to 34 and Comparative Examples 1 to 13]

A separator composed of a porous polypropylene film (#2400, manufactured by Celgard) was inserted and laminated between a stamped working electrode having a diameter of 9 mm in the form of a previously produced positive electrode and a counter electrode in the form of metal lithium foil (thickness: 0.15 mm) followed by filling with an electrolyte (non-aqueous electrolyte comprising LiPF₆ dissolved to a concentration of 1 M in a mixed solvent of ethylene carbonate and diethyl carbonate mixed at a ratio of 1:1) to assemble a two-electrode sealed metal cell (HS Flat Cell manufactured by Hosen). Cell assembly was carried out in a glove box replaced with argon gas and prescribed evaluations of battery properties were carried out following cell assembly (see Tables 14 to 16 and Table 11).

### <Assembly of Cell for Evaluating Lithium Secondary Battery Negative Electrodes>

### [Examples 35 to 54 and Comparative Examples 14 to 18]

A separator composed of a porous polypropylene film (#2400, manufactured by Celgard) was inserted and laminated between a stamped working electrode having a diameter of 9 mm in the form of a previously produced negative electrode and a counter electrode in the form of metal lithium foil (thickness: 0.15 mm) followed by filling with an electrolyte (non-aqueous electrolyte comprising LiPF₆ dissolved to a concentration of 1 M in a mixed solvent of ethylene carbonate and diethyl carbonate mixed at a ratio of 1: 1) to assemble a two-electrode sealed metal cell (HS Flat Cell manufactured by Hosen). Cell assembly was carried out in a glove box replaced with argon gas and prescribed evaluations of battery properties were carried out following cell assembly (see Tables 14 to 16 and Table 11).

### <Assembly of Cell for Evaluating Resistance to Metal Contaminants of Lithium

### Secondary Battery>

### [Examples 55 to 71 and Comparative Example 19]

Previously produced positive electrodes and negative electrodes were cut to a width of 54 mm and length of 500 mm and wrapped with a separator composed of polyethylene (film thickness: 25 µm, width: 58 mm, porosity: 50%) interposed there between. The wrapped electrodes were then housed in a battery casing followed by injection of electrolyte. Following injection, the sealing openings were sealed to produce a battery (see Table 13).

Furthermore, the electrolyte used to evaluate battery resistance when contaminated by metal components in the examples and comparative examples consisted of a solution of LiPF₆ dissolved to a concentration of 1 M in a mixed solvent of ethylene carbonate and diethyl carbonate mixed at a ratio of 1:1 further containing 10 ppm of a copper ion source in the form of Cu(BF₄)₂ or 50 ppm of an iron ion source in the form of Fe(CF₃SO₂)₂.

### <Evaluation of Lithium Secondary Battery Positive Electrode Properties>

### [Charge/Discharge Cycle Properties - Examples 1 to 32 and 34 and Comparative Examples 1 to 10, 12 and 13]

A previously produced cell for battery evaluation was fully charged at room temperature (25°C) by constant-current, constant-voltage charging (upper limit voltage: 4.2 V) at a charging rate of 0.2 or 1.0 C followed by discharging at a constant current at the same rates as during charging to a discharge lower limit voltage of 3.0 V to constitute one cycle of charging and discharging (a rest period of 30 minutes was provided between charging and discharging). Charge/discharge cycle properties were evaluated (evaluation instrument: SM-8 manufactured by Hokuto Denko) after repeating 20 of these cycles. In addition, the cell was disassembled following evaluation to visually confirm the appearance of the electrode coated films. The evaluation results are shown in Tables 14 to 16 and Table 11.

### [Charge/Discharge Cycle Properties - Example 33 and Comparative Example 11]

A previously produced cell for battery evaluation was fully charged at room temperature (25°C) by constant-current, constant-voltage charging (upper limit voltage: 4.5 V) at a charging rate of 0.2 or 1.0 C followed by discharging at a constant current at the same rates as during charging to a discharge lower limit voltage of 2.0 V to constitute one cycle of charging and discharging (a rest period of 30 minutes was provided between charging and discharging). Charge/discharge cycle properties were evaluated (evaluation instrument: SM-8 manufactured by Hokuto Denko) after repeating 20 of these cycles. In addition, the cell was disassembled following evaluation to visually confirm the appearance of the electrode coated films. The evaluation results are shown in Table 16.

### [Measurement of Direct Current Internal Resistance - Examples 1 to 33 and Comparative Examples 1 to 11]

A previously produced cell for battery evaluation was fully charged at room temperature (25°C) by constant-current, constant-voltage charging (upper limit voltage: 4.2 V) at a charging rate of 0.2 C followed by discharging at a constant current at the discharging rates of 0.1, 0.2, 0.5 or 1.0 C and measurement of battery voltage. Voltage values were plotted versus current values to the slope of the resulting linear relationship was defined as internal resistance. Although the evaluation results are shown in Tables 14 to 16, in the case of using lithium cobalt oxide for the positive electrode active substance, internal resistance was indicated as a relative value based on a value of 100 for the measured value of internal resistance of Example 1. In the case of using lithium manganese oxide for the positive electrode active substance, internal resistance was indicated as a relative value based on a value of 100 for the measured value of internal resistance of Example 30. In addition, in the case of using lithium nickel oxide for the positive electrode active substance, internal resistance was indicated as a relative value based on a value of 100 for the measured value of internal resistance of Example 32. In addition, in the case of using lithium iron oxide for the positive electrode active substance, internal resistance was indicated as a relative value based on a value of 100 for the measured value of internal resistance of Example 33.

As can be seen from Tables 14 to 16, the dispersibility and time-based stability of the positive electrode composite pastes of the examples improved as compared with that of the comparative examples. In addition, internal resistance tended to decrease and both battery capacity and 20-cycle capacity retention rate improved in comparison with the comparative examples. In addition, since carbon wettability effects were particularly large in the examples, there was a greater tendency for battery performance to be satisfactory.
In addition, improved adhesion was observed in the electrode of the present invention provided with an electrode foundation layer (Example 34).

### <Evaluation of Lithium Secondary Battery Negative Electrode Properties>

### [Charge/Discharge Cycle Properties - Examples 35 to 54 and Comparative Examples 14 to 18]

A previously produced cell for battery evaluation was fully charged at room temperature (25°C) by constant-current, constant-voltage charging (upper limit voltage: 0.5 V) at a charging rate of 0.2 or 1.0 C followed by discharging at a constant current at the same rates as during charging until the voltage reached 1.5 V to constitute one cycle of charging and discharging (a rest period of 30 minutes was provided between charging and discharging). Charge/discharge cycle properties were evaluated (evaluation instrument: SM-8 manufactured by Hokuto Denko) after repeating 20 of these cycles. In addition, the cell was disassembled following evaluation to visually confirm the presence or absence of electrode coated film defects. The evaluation results are shown in Tables 17 and 12.

As can be seen from Tables 17 and 12, the dispersibility and time-based stability of the negative electrode composite pastes of Examples 35 to 53 improved as compared with that Comparative Examples 14 and 15. Battery capacity and 20-cycle capacity retention rate improved in comparison with Examples 14 to 16. In addition, since carbon wettability effects were particularly large in the examples, there was a greater tendency for battery performance to be satisfactory.
In addition, improved adhesion was observed in the electrode of the present invention provided with an electrode foundation layer (Example 54).

### <Evaluation of Resistance to Metal Contaminants of Lithium Secondary Battery>

### [Charge/Discharge Cycle Properties - Examples 55 to 71 and Comparative Example 19]

A previously produced cell for battery evaluation was fully charged at room temperature (25°C) by constant-current, constant-voltage charging (upper limit voltage: 4.0 V) at a charging rate of 1.0 C followed by discharging at a constant current at the same rate as during charging until the voltage reached 2.75 V to constitute one cycle of charging and discharging (a rest period of 30 minutes was provided between charging and discharging), and evaluation was carried out for a total of 20 cycles or more. During evaluation, capacity retention rate was determined from the initial discharge capacity and discharge capacity of the 20th cycle, and a capacity retention rate of 95% or more was evaluated as "⊗", that of 90% to less than 95% as "O", that of 85% to less than 90% as "Δ", and that of less than 85% as "x". The evaluation results are shown in Table 18.

In the batteries of Examples 55 to 71, stable charging and discharging cycles were able to be repeated for 20 cycles. In addition, capacity retention rates for 20 cycles of charging and discharging tended to be high in the case the acidic functional group of the dispersant was a sulfonic acid group (-SO₃H) carboxyl group (-COOH) or phosphoric acid group (-P(O)(-OH)₂). On the other hand, the battery of Comparative Example 19 was unable to be charged and discharged after 5 cycles. When the cell was disassembled following evaluation, a short-circuit was determined to have occurred caused by dendritic metal precipitates.

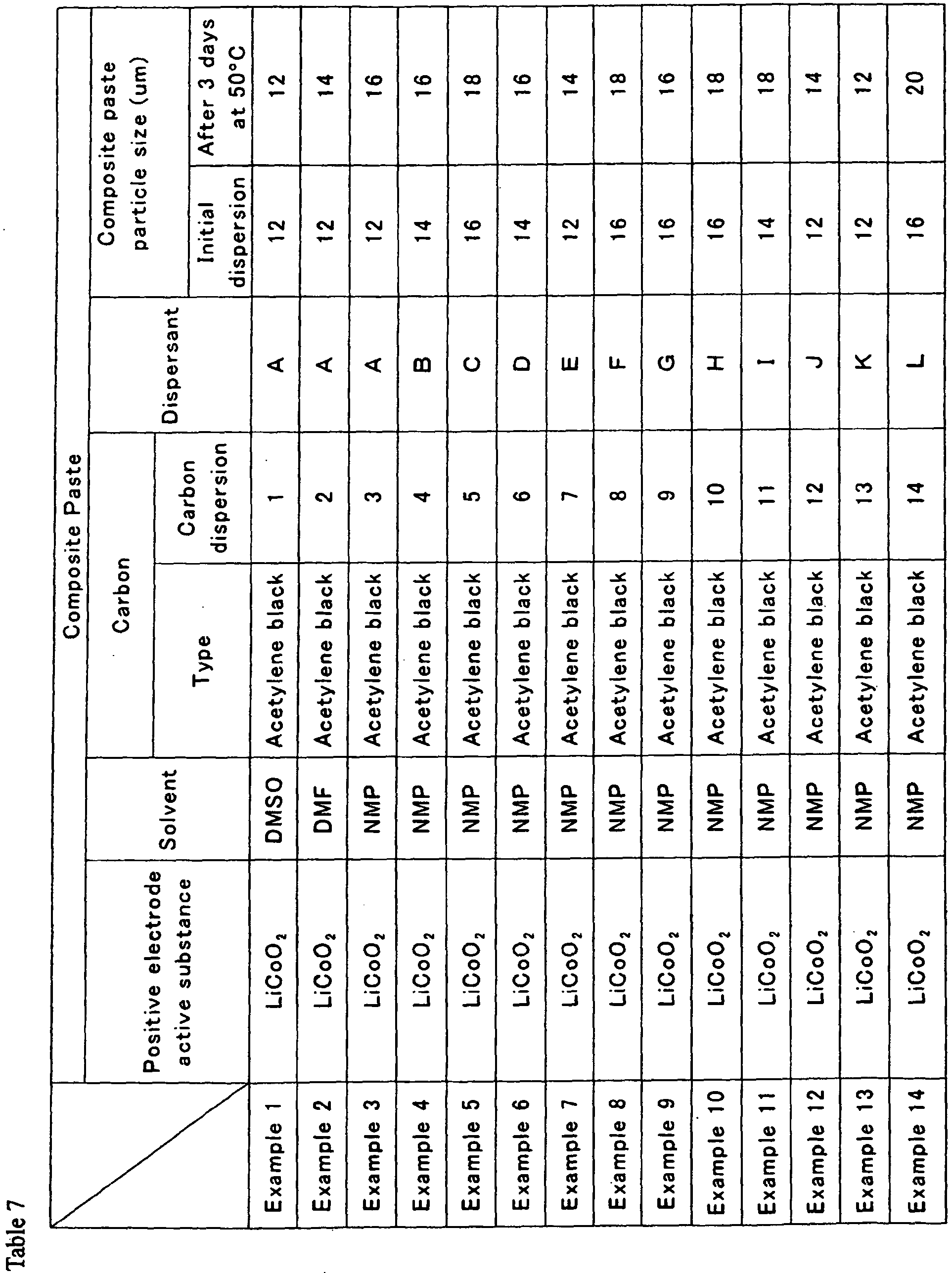

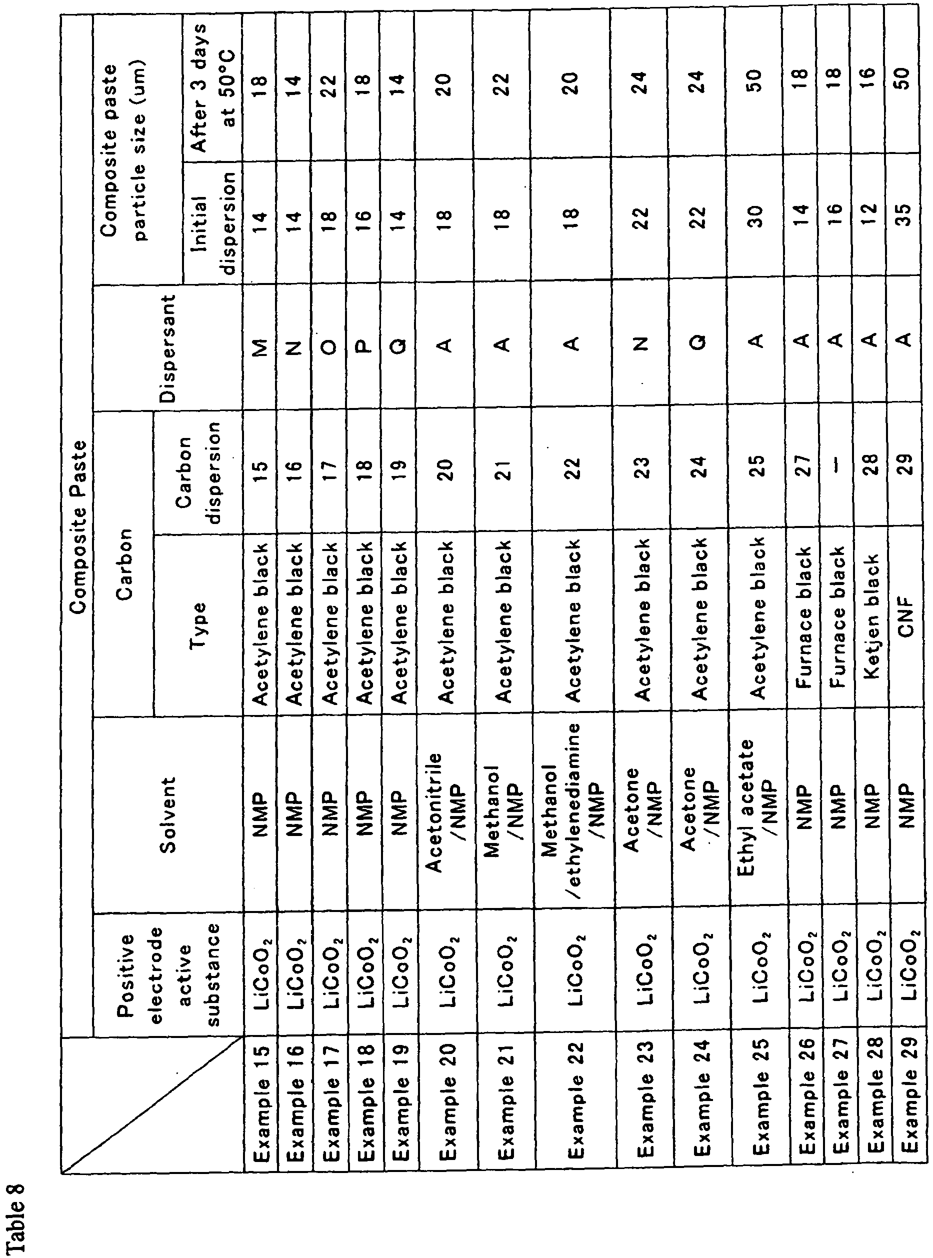

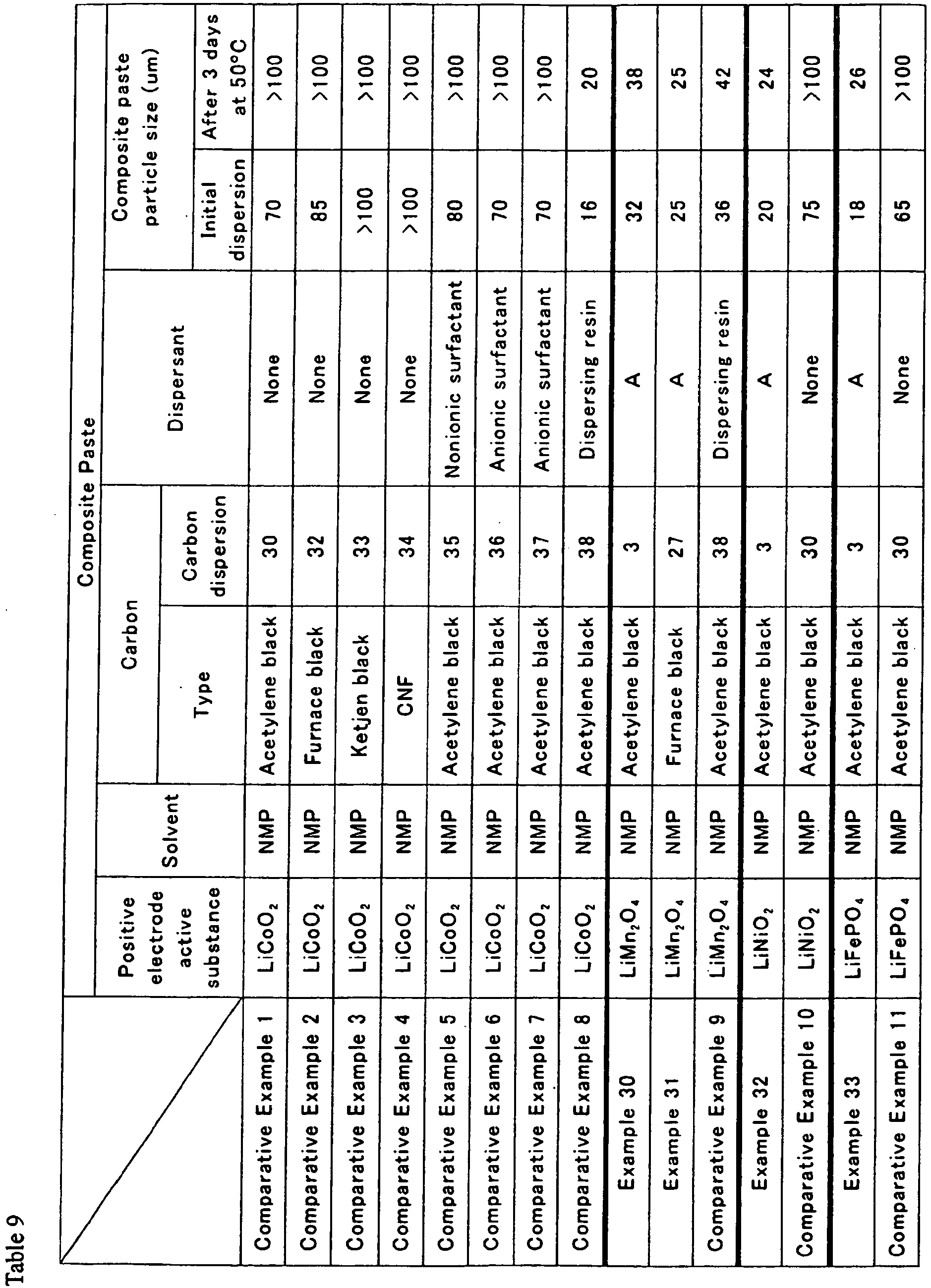

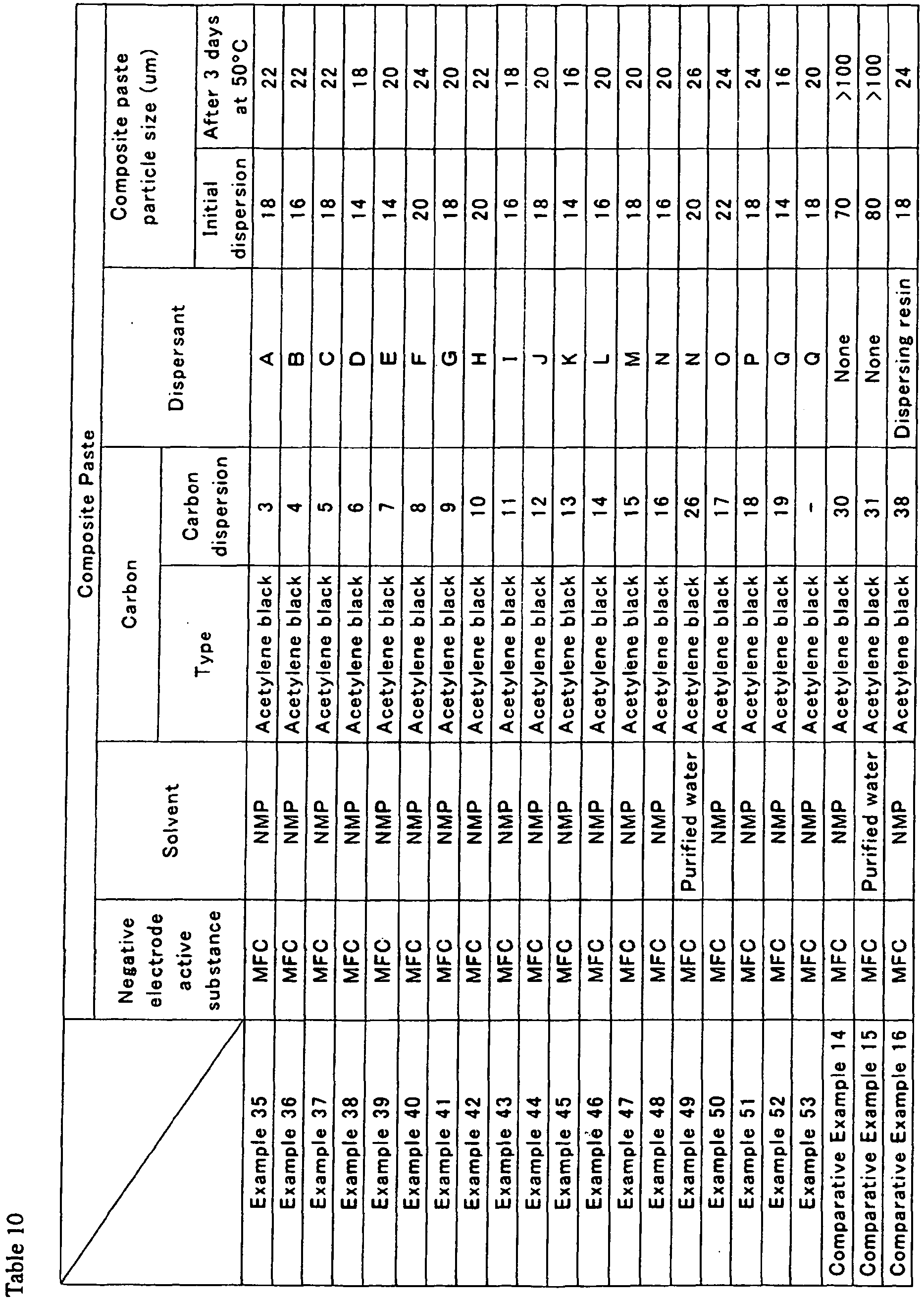

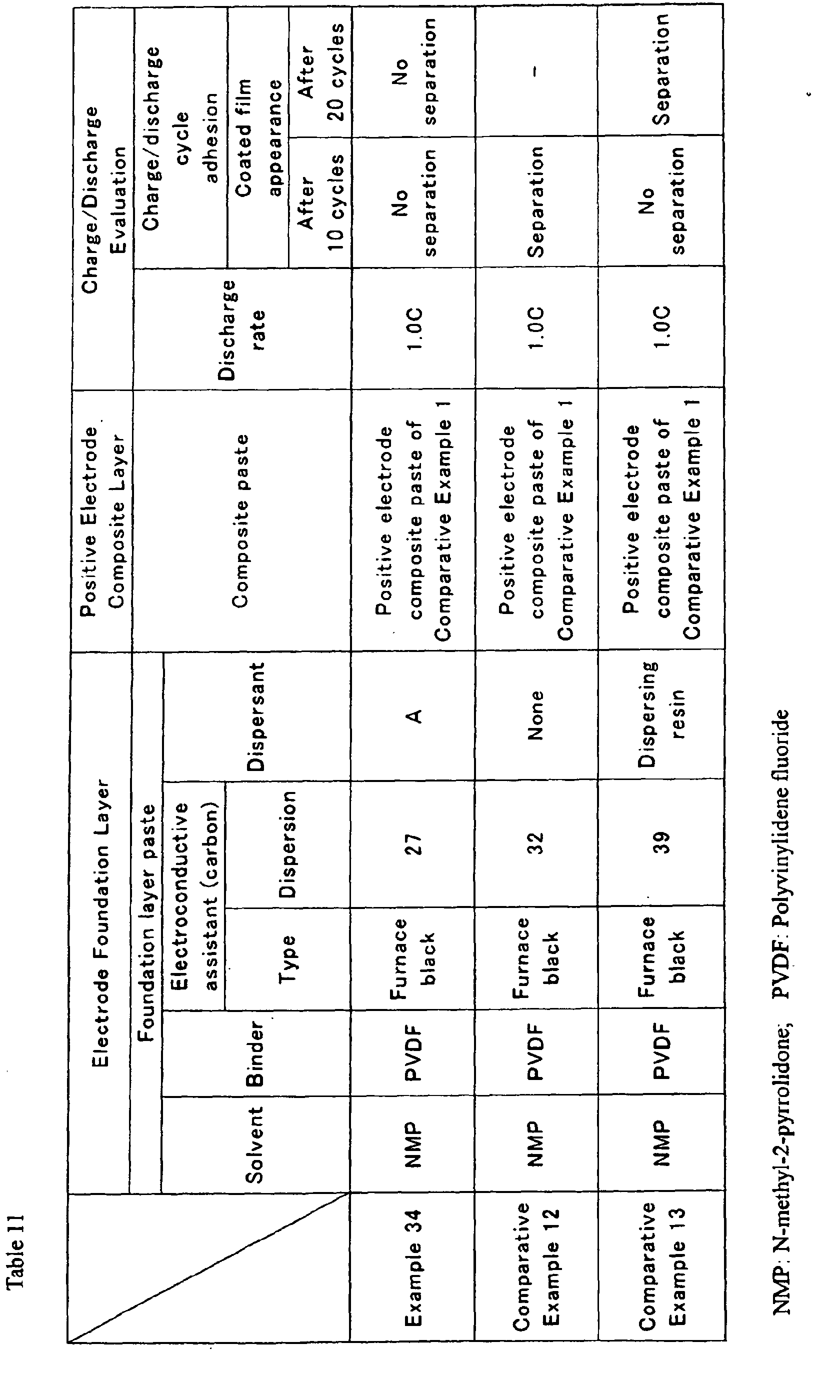

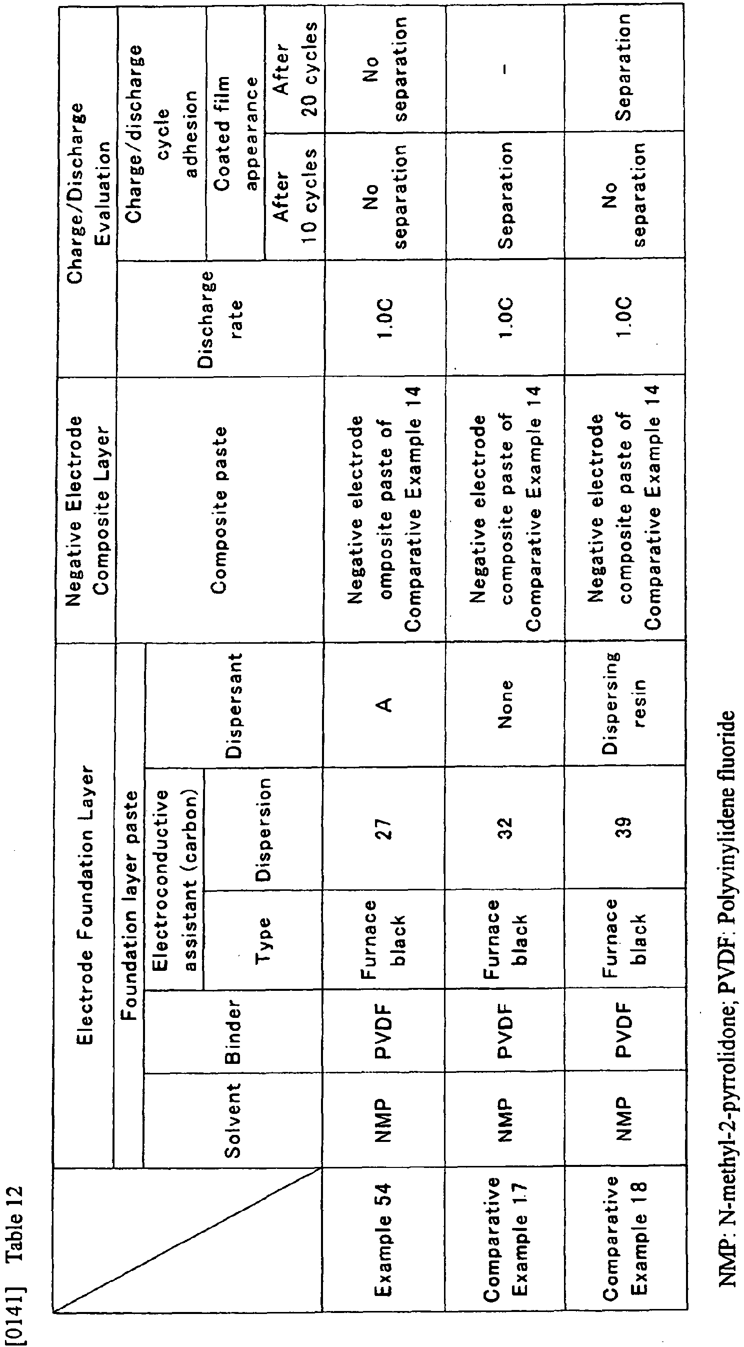

Table 13

| | Electrode | | | | | | |
|---|---|---|---|---|---|---|---|
| | Positive electrode composite paste used | Negative electrode composite paste used | Electrode materials | | | | |
| | | | Positive electrode active substance | Negative electrode active substance | Binder | Carbon type | Dispersant type |
| Example 55 | Paste of Example 3 | Paste of Example 35 | LiCoO₂ | MFC | PVDF | Acetylene black | A |
| Example 56 | Paste of Example 4 | Paste of Example 36 | LiCoO₂ | MFC | PVDF | Acetylene black | B |
| Example 57 | Paste of Example 5 | Paste of Example 37 | LiCoO₂ | MFC | PVDF | Acetylene black | C |
| Example 58 | Paste of Example 6 | Paste of Example 38 | LiCoO₂ | MFC | PVDF | Acetylene black | D |
| Example 59 | Paste of Example 7 | Paste of Example 39 | LiCoO₂ | MFC | PVDF | Acetylene black | E |
| Example 60 | Paste of Example 8 | Paste of Example 40 | LiCoO₂ | MFC | PVDF | Acetylene black | F |
| Example 61 | Paste of Example 9 | Paste of Example 41 | LiCoO₂ | MFC | PVDF | Acetylene black | G |
| Example 62 | Paste of Example 10 | Paste of Example 42 | LiCoO₂ | MFC | PVDF | Acetylene black | H |
| Example 63 | Paste of Example 11 | Paste of Example 43 | LiCoO₂ | MFC | PVDF | Acetylene black | I |
| Example 64 | Paste of Example 12 | Paste of Example 44 | LiCoO₂ | MFC | PVDF | Acetylene black | J |
| Example 65 | Paste of Example 13 | Paste of Example 45 | LiCoO₂ | MFC | PVDF | Acetylene black | K |
| Example 66 | Paste of Example 14 | Paste of Example 46 | LiCoO₂ | MFC | PVDF | Acetylene black | L |
| Example 67 | Paste of Example 15 | Paste of Example 47 | LiCoO₂ | MFC | PVDF | Acetylene black | M |
| Example 68 | Paste of Example 16 | Paste of Example 48 | LiCoO₂ | MFC | PVDF | Acetylene black | N |
| Example 69 | Paste of Example 17 | Paste of Example 50 | LiCoO₂ | MFC | PVDF | Acetylene black | O |
| Example 70 | Paste of Example 18 | Paste of Example 51 | LiCoO₂ | MFC | PVDF | Acetylene black | P |
| Example 71 | Paste of Example 19 | Paste of Example 52 | LiCoO₂ | MFC | PVDF | Acetylene black | Q |
| Comparative Example 19 | Paste of Comparative Example 1 | Paste of Comparative Example 14 | LiCoO₂ | MFC | PVDF | Acetylene black | None |

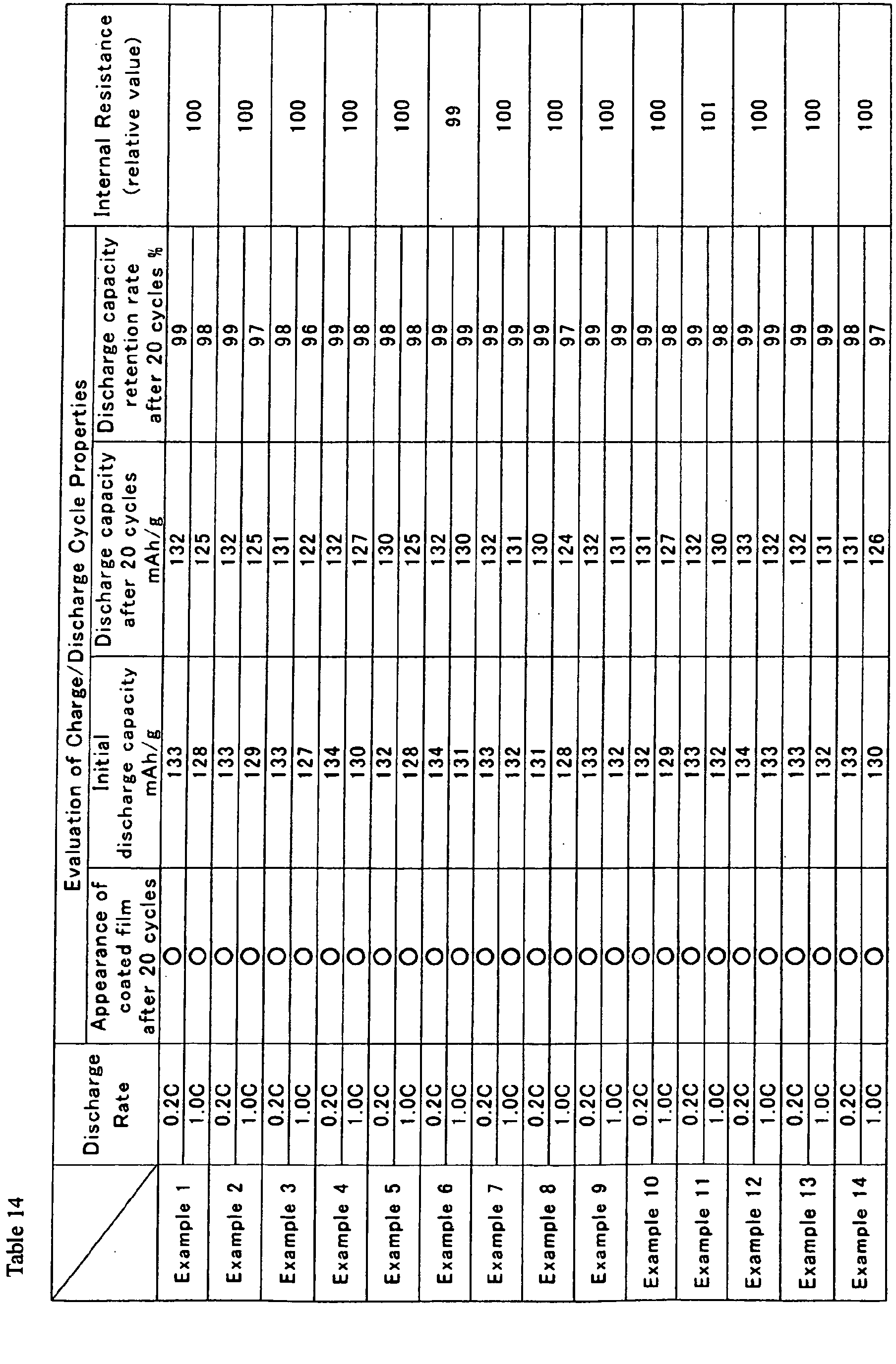

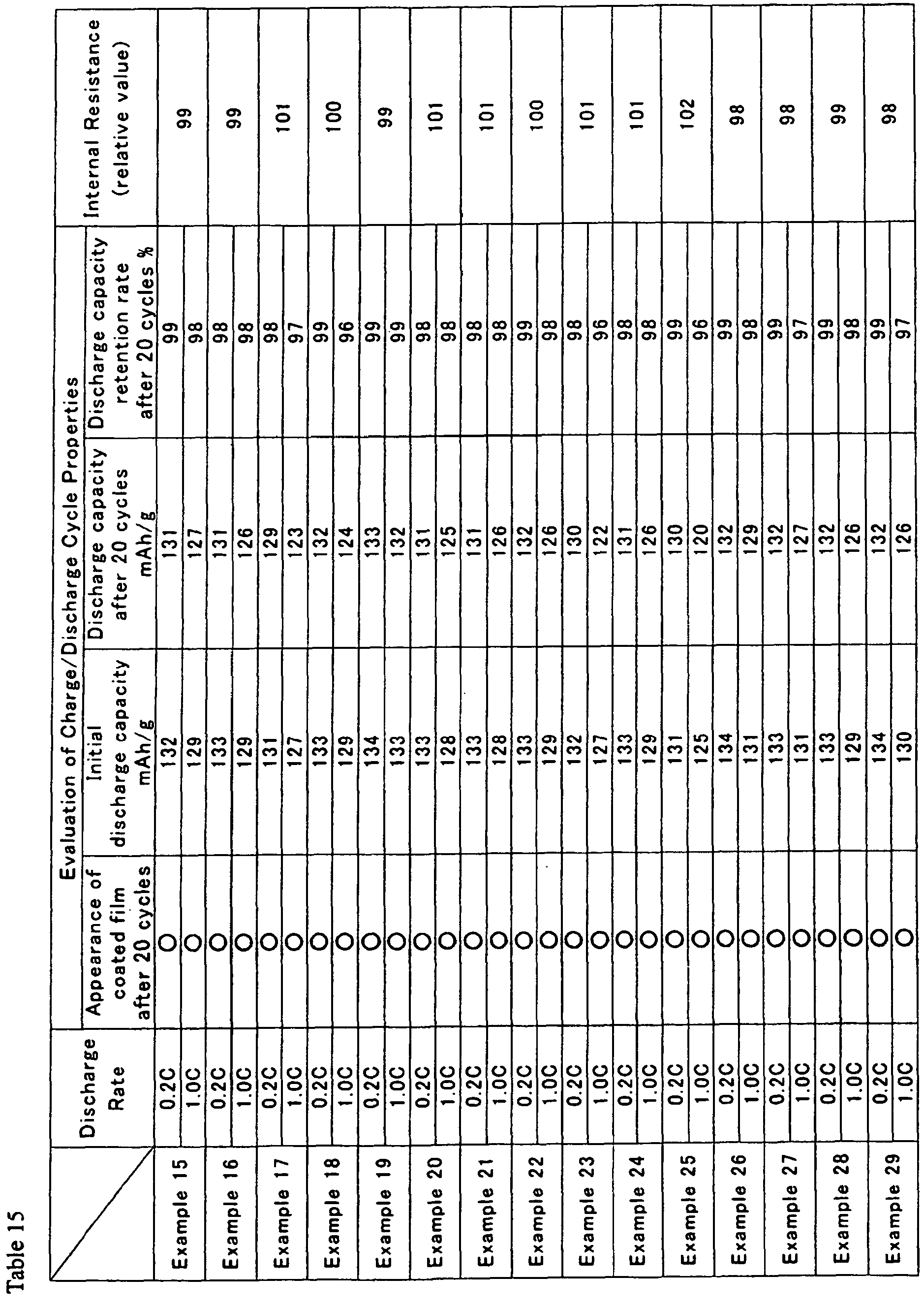

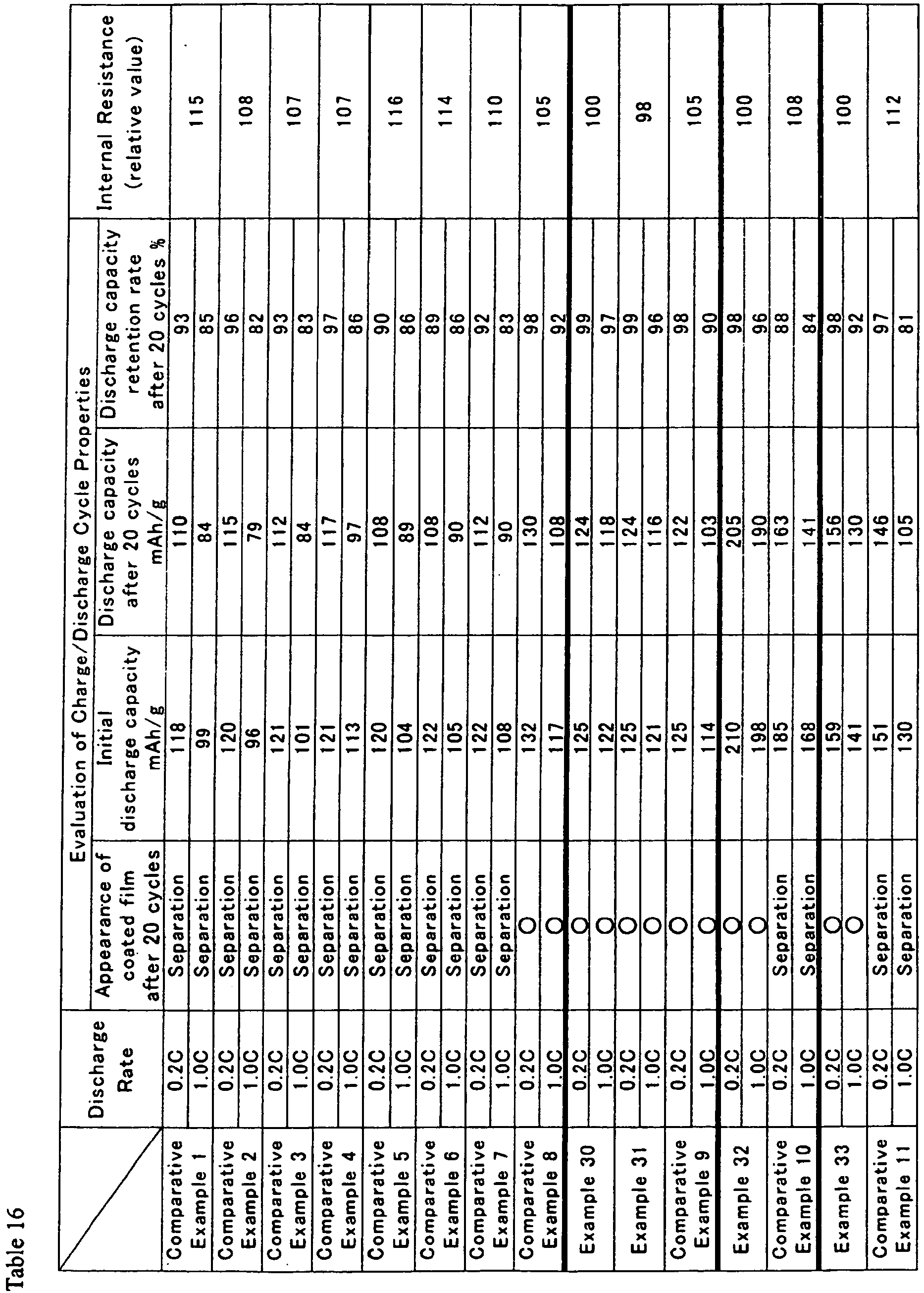

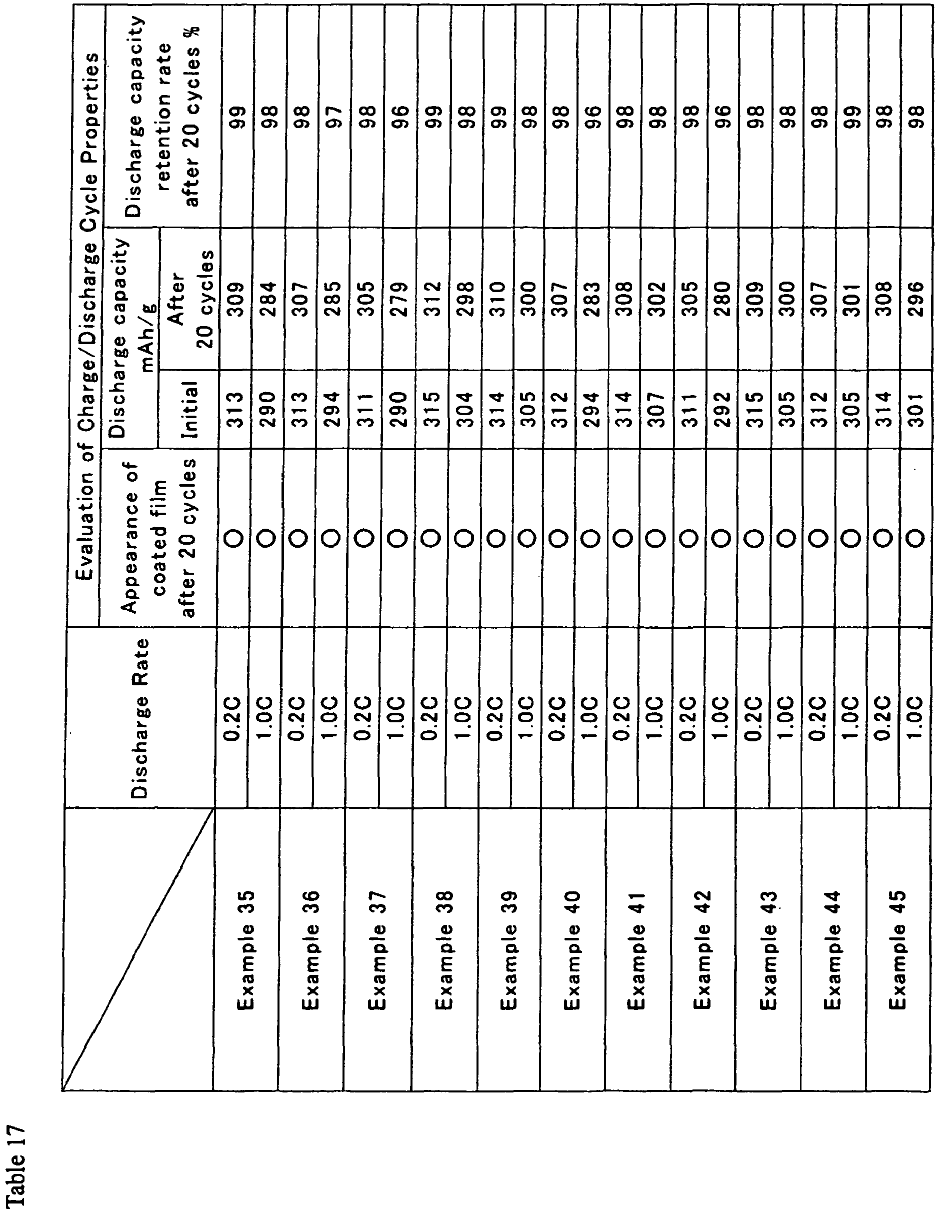

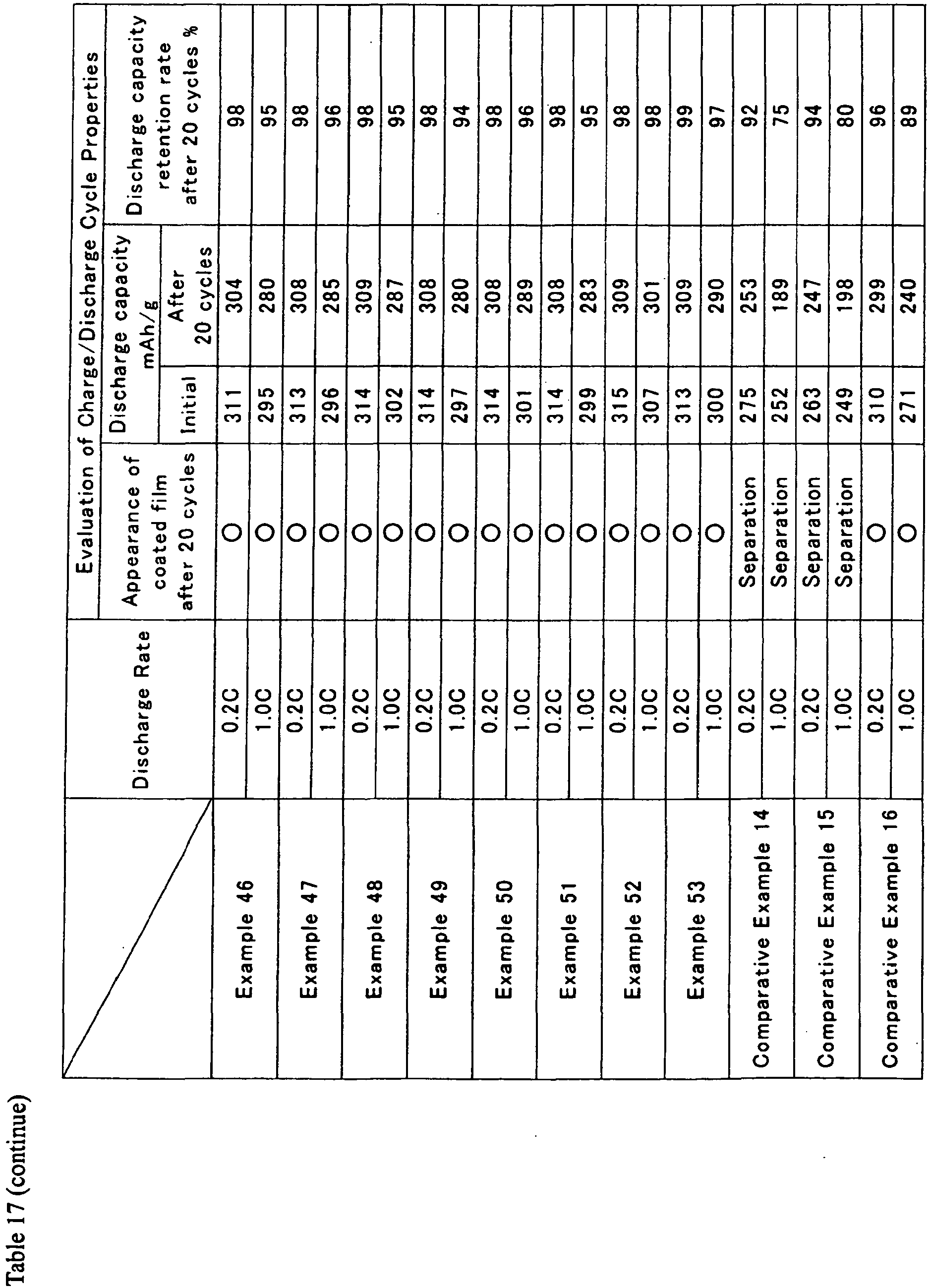

**Table 18**

| | Charge/Discharge Cycle Test | | |
|---|---|---|---|
| | Added metal ion | Number of cycles | Capacity retention rate after 20 cycles |
| Example 55 | Fe | 20 or more | Ⓞ |
| Example 56 | Fe | 20 or more | Ⓞ |
| Example 57 | Fe | 20 or more | Δ |
| Example 58 | Cu | 20 or more | ○ |
| Example 59 | Cu | 20 or more | ○ |
| Example 60 | Cu | 20 or more | Ⓞ |
| Example 61 | Fe | 20 or more | ○ |
| Example 62 | Fe | 20 or more | Ⓞ |
| Example 63 | Cu | 20 or more | ○ |
| Example 64 | Cu | 20 or more | ○ |
| Example 65 | Cu | 20 or more | ○ |
| Example 66 | Cu | 20 or more | Ⓞ |
| Example 67 | Cu | 20 or more | Ⓞ |
| Example 68 | Fe | 20 or more | Ⓞ |
| Example 69 | Fe | 20 or more | Ⓞ |
| Example 70 | Cu | 20 or more | Δ |
| Example 71 | Cu | 20 or more | ○ |
| Comparative Example 19 | Cu | Shorted after 5 cycles | - |

## Claims

1. A battery electrode composition, comprising: at least one type of dispersant selected from an organic pigment derivative having an acidic functional group(s) or a triazine derivative having an acidic functional group(s), and a carbon material as an electroconductive assistant, wherein the acidic functional group is a phosphoric acid group (-P(O)(-OH)₂), an ammonium sulfonate salt, an ammonium carboxylate salt or an ammonium phosphate salt.

2. The battery electrode composition according to claim 1, wherein the at least one type of dispersant selected from an organic pigment derivative having an acidic functional group(s) or a triazine derivative having an acidic functional group(s) is non-water-soluble.

3. The battery electrode composition according to claim 1 or 2, further comprising a solvent.

4. The battery electrode composition according to any of claims 1 to 3, wherein the dispersed particle diameter (D₅₀) of the carbon material as an electroconductive assistant is 2 µm or less.

5. The battery electrode composition according to any of claims 1 to 4, further comprising a binder component.

6. The battery electrode composition according to claim 5, wherein the binder component is a polymer compound containing a fluorine atom(s) within a molecule thereof.

7. The battery electrode composition according to any of claims 3 to 6, wherein the relative permittivity of the solvent is 15 to 200.

8. The battery electrode composition according to any of claims 3 to 7, wherein the donor number of the solvent is 15 to 60 Kcal/mol.

9. The battery electrode composition according to any of claims 3 to 8, wherein the solvent is aprotic.

10. The battery electrode composition according to any of claims 1 to 9, further comprising a positive electrode active substance or a negative electrode active substance.

11. A production process of a battery electrode composition, comprising: dispersing a carbon material as an electroconductive assistant in a solvent in the presence of at least one type of dispersant selected from an organic pigment derivative having an acidic functional group(s) or a triazine derivative having an acidic functional group(s) wherein the acidic functional group is a phosphoric acid group (-P(O)(-OH)₂), an ammonium sulfonate salt, an ammonium carboxylate salt or an ammonium phosphate salt.

12. The production process of a battery electrode composition according to claim 11, comprising: mixing a positive electrode active substance, a negative electrode active substance or a binder component into a dispersion obtained by dispersing a carbon material as an electroconductive assistant in a solvent in the presence of at least one type of dispersant selected from an organic pigment derivative having an acidic functional group(s) or a triazine derivative having an acidic functional group(s).

13. A lithium secondary battery, comprising: a positive electrode having a positive electrode composite layer on a current collector, a negative electrode having a negative electrode composite layer on a current collector and an electrolyte containing lithium, wherein the positive electrode composite layer or the negative electrode composite layer is formed by using the battery electrode composition according to claim 10.

14. A lithium secondary battery, comprising: a positive electrode having a positive electrode composite layer on a current collector, a negative electrode having a negative electrode composite layer on a current collector and an electrolyte containing lithium, wherein an electrode foundation layer is formed, between the positive electrode composite layer and the current collector or between the negative electrode composite layer and the current collector, by using the battery electrode composition according to any of claims 1 to 9.

## Patentansprüche

1. Eine Batterieelektroden-Zusammensetzung umfassend:
mindestens eine Art von Dispergiermittel, ausgewählt aus einem organischen Pigment-Derivat, das eine saure funktionelle Gruppe(n) hat, oder aus einem Triazin-Derivat, das eine saure funktionelle Gruppe(n) hat, und ein Kohlenstoff-Material als elektrisch leitfähiger Hilfsstoff, wobei die saure funktionelle Gruppe eine Phosphorsäure-Gruppe (-P(O)(-OH)₂), ein Ammoniumsulfonat-Salz, ein Ammoniumcarboxylat-Salz oder ein Ammoniumphosphat-Salz ist.

2. Die Batterieelektroden-Zusammensetzung nach Anspruch 1, wobei die mindestens eine Art von Dispergiermittel, ausgewählt aus einem organischen Pigment-Derivat, das eine saure funktionelle Gruppe(n) hat, oder aus einem Triazin-Derivat, das eine saure funktionelle Gruppe(n) hat, wasserunlöslich ist.

3. Die Batterieelektroden-Zusammensetzung nach Anspruch 1 oder 2, weiter umfassend ein Lösungsmittel.

4. Die Batterieelektroden-Zusammensetzung nach einem der Ansprüche 1 bis 3, wobei der dispergierte Teilchendurchmesser (D₅₀) des Kohlenstoff-Materials als elektrisch leitfähiger Hilfsstoff 2 µm oder weniger ist.

5. Die Batterieelektroden-Zusammensetzung nach einem der Ansprüche 1 bis 4, weiter umfassend eine Bindemittelkomponente.

6. Die Batterieelektroden-Zusammensetzung nach Anspruch 5, wobei die Bindemittelkomponente eine Polymerverbindung ist, die in einem Molekül ein Fluoratom(e) davon enthält.

7. Die Batterieelektroden-Zusammensetzung nach einem der Ansprüche 3 bis 6, wobei die relative Dielektrizitätskonstante des Lösungsmittels 15 bis 200 ist.

8. Die Batterieelektroden-Zusammensetzung nach einem der Ansprüche 3 bis 7, wobei die Donor-Nummer des Lösungsmittels 15 bis 60 Kcal/mol ist.

9. Die Batterieelektroden-Zusammensetzung nach einem der Ansprüche 3 bis 8, wobei das Lösungsmittel aprotisch ist.

10. Die Batterieelektroden-Zusammensetzung nach einem der Ansprüche 1 bis 9, weiter umfassend eine positiv-elektroden-aktive Substanz oder eine negativelektroden-aktive Substanz.

11. Ein Herstellungsverfahren für eine Batterieelektroden-Zusammensetzung umfassend:
Dispergieren eines Kohlenstoff-Materials als elektrisch leitfähiger Hilfsstoff in einem Lösungsmittel in Gegenwart von mindestens einer Art von Dispergiermittel, ausgewählt aus einem organischen Pigment-Derivat, das eine saure funktionelle Gruppe(n) hat, oder aus einem Triazin-Derivat, das eine saure funktionelle Gruppe(n) hat, wobei die saure funktionelle Gruppe eine Phosphorsäure-Gruppe (-P(O)(-OH)₂), ein Ammoniumsulfonat-Salz, ein Ammoniumcarboxylat-Salz oder ein Ammoniumphosphat-Salz ist.

12. Das Herstellungsverfahren für eine Batterieelektroden-Zusammensetzung nach Anspruch 11, umfassend:
Mischen einer positiv-elektroden-aktiven Substanz, einer negativ-elektroden-aktiven Substanz oder einer Bindemittelkomponente in eine Dispersion, die durch Dispergieren eines Kohlenstoff-Materials als elektrisch leifähiger Hilfsstoff in einem Lösungsmittel in Gegenwart von mindestens einer Art von Dispergiermittel, ausgewählt aus einem organischen Pigment-Derivat, das eine saure funktionelle Gruppe(n) hat, oder aus einem Triazin-Derivat, das eine saure funktionelle Gruppe(n) hat, erhalten wird.

13. Eine Lithiumsekundärbatterie umfassend:
eine positive Elektrode mit einer Positiv-Elektroden-Verbund-Schicht auf einem Stromabnehmer, eine negative Elektrode mit einer Negativ-Elektroden-Verbundschicht auf einem Stromabnehmer und ein Elektrolyt, der Lithium enthält,
wobei die Positiv-Elektroden-Verbund-Schicht oder die Negativ-Elektroden-Verbundschicht durch die Verwendung der Batterieelektroden-Zusammensetzung nach Anspruch 10 gebildet wird.

14. Eine Lithiumsekundärbatterie umfassend:
eine positive Elektrode mit einer Positiv-Elektroden-Verbund-Schicht auf einem Stromabnehmer, eine negative Elektrode mit einer Negativ-Elektroden-Verbundschicht auf einen Stromabnehmer und ein Elektrolyt, der Lithium enthält,
wobei eine Elektroden-Grundschicht zwischen der Positiv-Elektroden-Verbund-Schicht und dem Stromabnehmer oder zwischen der Negativ-Elektroden-Verbundschicht und dem Stromabnehmer unter Verwendung der Batterieelektroden-Zusammensetzung nach einem der Ansprüche 1 bis 9 gebildet wird.

## Revendications

1. Composition d'électrode de batterie, comportant : au moins un type de dispersant choisi parmi un dérivé de pigment organique possédant un (des) groupe(s) fonctionnel(s) acide(s) ou un dérivé de triazine possédant un (des) groupe(s) fonctionnel(s) acide(s), et une matière carbonée en tant qu'assistant électroconducteur, dans laquelle le groupe fonctionnel acide est un groupe acide phosphorique (-P(O)(-OH)₂), un sel de sulfonate d'ammonium, un sel de carboxylate d'ammonium ou un sel de phosphate d'ammonium.

2. Composition d'électrode de batterie selon la revendication 1, dans laquelle le au moins un type de dispersant choisi parmi un dérivé de pigment organique possédant un (des) groupe(s) fonctionnel(s) acide(s) ou un dérivé de triazine possédant un (des) groupe(s) fonctionnel(s) acide(s) est non soluble dans l'eau.

3. Composition d'électrode de batterie selon la revendication 1 ou 2, comportant en outre un solvant.

4. Composition d'électrode de batterie selon l'une quelconque des revendications 1 à 3, dans laquelle le diamètre des particules dispersées (D₅₀) de la matière carbonée en tant qu'assistant électroconducteur est de 2 µm ou moins.

5. Composition d'électrode de batterie selon l'une quelconque des revendications 1 à 4, comportant en outre un composant liant.

6. Composition d'électrode de batterie selon la revendication 5, dans laquelle le composant liant est un composé polymère contenant un (des) atome(s) de fluor à l'intérieur d'une molécule de celui-ci.

7. Composition d'électrode de batterie selon l'une quelconque des revendications 3 à 6, dans laquelle la permittivité relative du solvant est de 15 à 200.

8. Composition d'électrode de batterie selon l'une quelconque des revendications 3 à 7, dans laquelle l'indice de donneur du solvant est de 15 à 60 Kcal/mole.

9. Composition d'électrode de batterie selon l'une quelconque des revendications 3 à 8, dans laquelle le solvant est aprotique.

10. Composition d'électrode de batterie selon l'une quelconque des revendications 1 à 9, comportant en outre une substance active d'électrode positive ou une substance active d'électrode négative.

11. Procédé de production d'une composition d'électrode de batterie, comportant les étapes consistant à : disperser une matière carbonée en tant qu'assistant électroconducteur dans un solvant en présence d'au moins un type de dispersant choisi parmi un dérivé de pigment organique possédant un (des) groupe(s) fonctionnel(s) acide(s) ou un dérivé de triazine possédant un (des) groupe(s) fonctionnel(s) acide(s), dans lequel le groupe fonctionnel acide est un groupe acide phosphorique (-P(O)(-OH)₂), un sel de sulfonate d'ammonium, un sel de carboxylate d'ammonium ou un sel de phosphate d'ammonium.

12. Procédé de production d'une composition d'électrode de batterie selon la revendication 11, comportant les étapes consistant à : mélanger une substance active d'électrode positive, une substance active d'électrode négative ou un composant liant dans une dispersion obtenue en dispersant une matière carbonée comme assistant électroconducteur dans un solvant en présence d'au moins un type de dispersant choisi parmi un dérivé de pigment organique possédant un (des) groupe(s) fonctionnel(s) acide(s) ou un dérivé de triazine possédant un (des) groupe(s) fonctionnel(s) acide(s).

13. Batterie secondaire au lithium, comportant : une électrode positive ayant une couche composite d'électrode positive sur un collecteur de courant, une électrode négative ayant une couche composite d'électrode négative sur un collecteur de courant et un électrolyte contenant du lithium, dans laquelle la couche composite d'électrode positive ou la couche composite d'électrode négative est formée en utilisant la composition d'électrode de batterie selon la revendication 10.

14. Batterie secondaire au lithium, comportant : une électrode positive ayant une couche composite d'électrode positive sur un collecteur de courant, une électrode négative ayant une couche composite d'électrode négative sur un collecteur de courant et un électrolyte contenant du lithium, dans laquelle une couche de fondation d'électrode est formée, entre la couche composite d'électrode positive et le collecteur de courant ou entre la couche composite d'électrode négative et le collecteur de courant, en utilisant la composition d'électrode de batterie selon l'une quelconque des revendications 1 à 9.
